# EUROPEAN PATENT SPECIFICATION

(11) **EP 3 620 735 B1**
(45) Date of publication and mention of the grant of the patent: **08.03.2023**
(21) Application number: 19193822.4
(22) Date of filing: 27.08.2019
(51) Int. Cl.: F25D 25/02, F25D 23/06

(54) **REFRIGERATOR**
KÜHLSCHRANK
RÉFRIGÉRATEUR

(30) Priority: 29.08.2018 KR 20180102318
(43) Date of publication of application: 11.03.2020
(73) Proprietor: LG ELECTRONICS INC., Yeongdeungpo-Gu Seoul 07336 (KR)
(72) Inventor: OH, Changseok, 08592 Seoul (KR)
(74) Representative: Ter Meer Steinmeister & Partner

(56) References cited:
- EP-A1- 3 358 282
- WO-A1-2014/201615
- US-A1- 2011 219 808

## Description

### BACKGROUND

The present specification relates to a refrigerator.

Generally, a refrigerator is a household appliance which can store food in an internal storage space which is shielded by a door at low temperatures, and the refrigerator is configured to store the stored food in an optical state by cooling an inside of the storage space using cold air generated by heat exchange with a refrigerant circulating in a refrigeration cycle.

Such a refrigerator tends to be large-sized and multifunctional as the dietary life is changed and taste of a user is diversified and the refrigerator which has various storage spaces for the user's convenience and has a convenience device is released.

Korean Patent Laid-Open Publication No. 10-2017-0138321, which is a related art, discloses a refrigerator.

The refrigerator of the related art includes a cabinet in which a storage space is formed, a pantry assembly provided in the storage space and forming a receiving space for a separate food, and a shielding member which is provided on the pantry assembly and shields a portion of the upper surface of the pantry assembly.

The pantry assembly includes a pair of support members disposed on both sides of the storage space, a receiving member provided between the pair of support members to pull in and out along the support member, a cover member which shields a portion of an opened upper surface of the receiving member and is moved in a direction opposite to a moving direction of the receiving member by being interlocked with pulling-in and out operations of the receiving member, and a drive unit which is provided on the support member and connects so that the receiving member and the cover member are interlocked with each other.

The drive unit includes a second gear assembly coupled to the receiving member and moved in the same direction as the receiving member when the receiving member is pulled in and out, a first gear member coupled to the cover member and moved in the same direction as the cover member; a connecting gear rotatably provided between the second gear assembly and the first gear assembly and connecting the second gear assembly and the first gear member; and an elastic member for forcing the receiving member to be pulled in in a state where the receiving member and the second gear assembly are coupled.

According to the related art, a user has to apply a force greater than the elastic force of the elastic member and the load of the receiving member in order to pull the receiving member.

When the elastic force of the elastic member is increased, while a force by which a user pulls the receiving member is increased to make it difficult to open the receiving member, the receiving member is easily returned to the original position thereof by the elastic member in a process of pushing the receiving member in order to return the receiving member to an original position thereof. However, in a case where the elastic force of the elastic member is large, there is a disadvantage that the collision noise is large in a process of returning the receiving member to the original position.

On the other hand, when the elastic force of the elastic member is small, a force to pull the receiving member is required to be small. However, there is a disadvantage that the load of the receiving member is larger than the force that the elastic member pulls the receiving member in a process of pushing the receiving member in order to return the receiving member to the original position thereof, so that the receiving member cannot be completely returned to the original position thereof only by the elastic force of the elastic member.

EP 3 358 282 A1 relates to a refrigerator having a cabinet having a storage space; a door for opening and closing the storage space; a pair of support members, each provided at each of both sides of the storage space; a storage member which is provided between the pair of support members and pushed in and drawn out along the support member, and has an opening in the top surface so that food is inserted therethrough; a shielding member, provided above the storage member, for shieling a rear portion of the opening of the storage member; a cover member which shields a front portion of the opening of the storage member, is moved, as a result of the storage member being pushed in or drawn out, in the opposite direction to the direction in which the storage member is moved, and is moved rearward between the shielding member and the storage member when the storage member is drawn out; and a driving unit connecting the storage member and the cover member so as to make same move together. EP 3 358 282 A1 discloses the preamble of claim 1.

US 2011/219808 A1 presents a refrigerator comprising a main body provided with a freezing chamber and a refrigerating chamber; a receiving member provided to be able to be drawn in and out to the main body and receiving foods; fixing members disposed on right and left sides of the receiving member and supporting the receiving members; entrance guide members provided between the receiving member and the fixing members and guiding sliding movement of the receiving members; and shaking prevention members provided on right and left sides of the receiving members and preventing a right and left shaking phenomenon of the receiving members.

WO 2014/201615 A1 presents a refrigerator having a drawer structure comprising a drawer and a box cover. Two ends of the drawer are separately provided with a drawer support. Each drawer support is provided with a guide rail, a gear, and a first gear rack. The drawer is disposed on the guide rails and is provided with second gear racks. The first gear racks, the gears and the second gear racks form a transmission fit. The box cover is of an overturned structure and is connected to the first gear racks. When the drawer is drawn out, the second gear racks on the drawer drive the gears to rotate. The gears further drive, by means of rotation, the first gear racks to move along a direction opposite to the second gear racks. The first gear racks are connected to the box cover, and accordingly, can automatically drive the box cover to overturn inwards within a 180-degree range. The box cover does not move beyond a specific plane and does not affect work of a part above the specific plane.

### SUMMARY

The present invention provides a refrigerator which requires less force when the receiving member is pulled out, and can easily return the receiving member to a pulling-in completion position when the receiving member is pulled in.

This invention provides a refrigerator in which the sliding distance of the cover member with respect to the pulling-out distance of the receiving member is increased to increase the opening area of the receiving member.

The present invention provides a refrigerator in which the entire receiving member can be kept in a horizontal state without being inclined when a height thereof is changed in a process in which the receiving member is pulled in and out.

This invention provides a refrigerator in which the cover member is prevented from being broken in a process of pulling-in and out the receiving member. The object is solved by the features of the independent claim. Preferred embodiments are given in the dependent claims.

According to an aspect of the present invention, there is provided a refrigerator including: a cabinet including an inner case forming a storage chamber; and a pantry assembly installed on both side walls of the inner case, wherein the pantry assembly includes a receiving member which forms a receiving space and can be pulled in and out from the storage chamber; a supporter assembly connected to the receiving member and guiding the pulling-in and out of the receiving member; and a cover member connected to the supporter assembly, wherein the cover member is covering the receiving space, and is configured to move in a direction opposite to the receiving member when the receiving member is pulled in and out.

The receiving member is coupled with a first roller rotatably installed on both side walls of the receiving member.

The supporter assembly includes a supporter having a guide rail for forming a space for receiving the first roller, and a transmission unit installed on the supporter and transmitting the movement force of the receiving member to the cover member.

The transmission unit includes an elastic member which provides an elastic force to the receiving member for automatic pulling-in of the receiving member in a process of pulling in the receiving member.

The transmission unit includes a connection member connected to the transmission protrusion of the receiving member, a first rack connected to the connection member, a transmission gear engaged with the first rack, and a second rack connected to the transmission gear and connected to the cover member.

The transmission gear may include a first gear and a second gear having a diameter which is larger than a diameter of the first gear. The first rack may include a first rack gear portion engaged with the first gear at a lower side of the first gear, and the second rack may include a second rack gear portion engaged with the second gear at an upper side of the second gear.

The length of the second rack gear portion is longer than the length of the first rack gear portion.

The second rack may include a cover coupling rib which is connected to the connecting frame and includes a hook hole.

The connecting frame may include a slot for receiving the cover coupling rib and a frame hook for hooking the hook hole of the cover coupling rib received in the slot.

The connection frame may further include an opening aligned with the hook hole in the vertical direction.

The cover member may include a coupling hook extending downward, and the connection frame may include a coupling wall having a coupling hole for coupling the coupling hook.

The guide rail includes a first guide portion, and a second guide portion positioned above the first guide portion and forming the space together with the first guide portion.

The first roller is supported by the first guide portion in a state where the first roller is received in a space of the guide rail, and the first guide portion includes an inclined surface inclined so that the receiving member is lowered in a process of the pulling in the receiving member.

The second guide portion may include an inclined surface inclined at the same angle as the inclined surface of the first guide portion.

The guide rail may further include a connection portion connecting an inclined surface of the first guide portion and an inclined surface of the second guide portion.

In the present embodiment, the first roller may be in contact with the inclined surface of the first guide portion before the receiving member is moved to the pulling-in completion position.

In the present embodiment, the receiving member may further include guide protrusions protruding from both side walls and extending in the front and rear direction of the receiving member. The supporter may further include a second roller for supporting the guide protrusion, and the guide protrusion may include an inclined rib with which the second roller is in contact when the first roller is in contact with the inclined surface of the first guide portion.

The inclined angle of the inclined rib may be the same as the inclined surface of the first guide portion.

In the present embodiment, the guide protrusion may include a lower rib, an upper rib spaced apart from the lower rib, and a plurality of connection ribs connecting the lower rib and the upper rib with each other. The lower rib may include the inclined rib.

The inclined rib may be connected to the front end portion of the upper rib.

In the present embodiment, it may further include a connection frame connected to both sides of the cover member, and a transmission unit connected to the connection frame and transmitting the movement force of the receiving member to the cover member.

At least one of the cover member and the connection frame may be provided with a spacer rib so that a gap exists between the cover member and the receiving member.

In the present embodiment, the spacer ribs extend downward from at least one of the cover member and the connection frame, and can be seated on the upper surfaces of the side walls on both sides of the receiving member, respectively.

Each of the side walls of the receiving member may include a first wall having a horizontal upper surface, an inclined wall having an upper surface inclined downwardly from the first wall toward the rear side, and a second wall extending from the inclined wall toward the rear and having a horizontal upper surface.

When the first roller is in contact with the inclined surface of the first guide portion, the spacer rib may be in contact with the inclined wall.

The inclination angle of the upper surface of the inclined wall may be the same as the inclined surface of the first guide portion.

The receiving member includes a transmission protrusion connected to the transmission unit.

The receiving member can move between the pulling-in completion position and the pulling-out completion position. The cover member can be moved to the opening completion position before the receiving member is moved from the pulling-in completion position to the pulling-out completion position.

The horizontal distance between the center of gravity of the cover member and an imaginary line A1 passing vertically through the rotation shaft of the transmission gear at the opening completion position of the cover member may be shorter than the radius of the second gear.

At the pulling-in completion position of the receiving member, the imaginary line A1 passing vertically through the rotation shaft of the transmission gear may be positioned closer to the front end than the rear end of the pantry assembly.

When the first roller is in contact with the inclined surface in a process of moving the receiving member from the pulling-out completion position to the pulling-in completion position, the center of gravity C2 of the receiving member and the center of gravity C1 of the cover member may be positioned in front of the imaginary line A1.

The center of gravity C2 of the receiving member 510 may be positioned forward of the center of gravity C2 of the cover member 580 when the first roller is in contact with the inclined surface.

### BRIEF DESCRIPTION OF THE DRAWINGS

Fig. 1 is a perspective view illustrating a refrigerator in a state where a refrigerator door is opened according to an embodiment of the present invention.
Fig. 2 is a perspective view illustrating a pantry assembly in the refrigerating chamber and an upper drawer assembly.
Fig. 3 is a side view illustrating a disposition of the pantry assembly and a drawer assembly of Fig. 2.
Fig. 4 is a perspective view illustrating the pantry assembly according to an embodiment of the present invention.
Fig. 5 is an exploded perspective view illustrating the pantry assembly of Fig. 4.
Fig. 6 is a perspective view illustrating a state where a side cover is separated from the pantry assembly of Fig. 4.
Fig. 7 and Fig. 8 are perspective views illustrating a connection member according to an embodiment of the present invention.
Fig. 9 is a side view illustrating a pantry assembly according to an embodiment of the present invention.
Fig. 10 is an enlarged view illustrating portion A in Fig. 9.
Fig. 11 is an enlarged view illustrating portion B in Fig. 9.
Fig. 12 is an enlarged view illustrating portion C in Fig. 9.
Fig. 13 is a view illustrating a process of pulling out a receiving member according to an embodiment of the present invention in stages.
Fig. 14 is a view illustrating a state of the connection member at a pulling-in completion position of the receiving member.
Fig. 15 is a view illustrating a state where a connection member is rotated according to an embodiment of the present invention.
Fig. 16 is a perspective view illustrating a state where the receiving member has moved to the pulling-out completion position.
Fig. 17 is a view illustrating a relative position between the center of gravity of the receiving member and the center of gravity of the cover member.
Fig. 18 is a plan view illustrating a pantry assembly according to an embodiment of the present invention.
Fig. 19 is an enlarged view of Fig. 18D.
Fig. 20 is a sectional view taken along line A-A in Fig. 19.
Fig. 21 is a sectional view taken along line B-B of Fig. 19.

### DETAILED DESCRIPTION OF THE EMBODIMENTS

Hereinafter, some embodiments of the present invention will be described in detail with reference to the accompanying drawings. It should be noted that when components in the drawings are designated by reference numerals, the same components have the same reference numerals as far as possible even though the components are illustrated in different drawings. Further, in description of embodiments of the present disclosure, when it is determined that detailed descriptions of well-known configurations or functions disturb understanding of the embodiments of the present disclosure, the detailed descriptions will be omitted.

Also, in the description of the embodiments of the present disclosure, the terms such as first, second, A, B, (a) and (b) may be used. Each of the terms is merely used to distinguish the corresponding component from other components, and does not delimit an essence, an order or a sequence of the corresponding component. It should be understood that when one component is "connected", "coupled" or "joined" to another component, the former may be directly connected or jointed to the latter or may be "connected", coupled" or "joined" to the latter with a third component interposed therebetween.

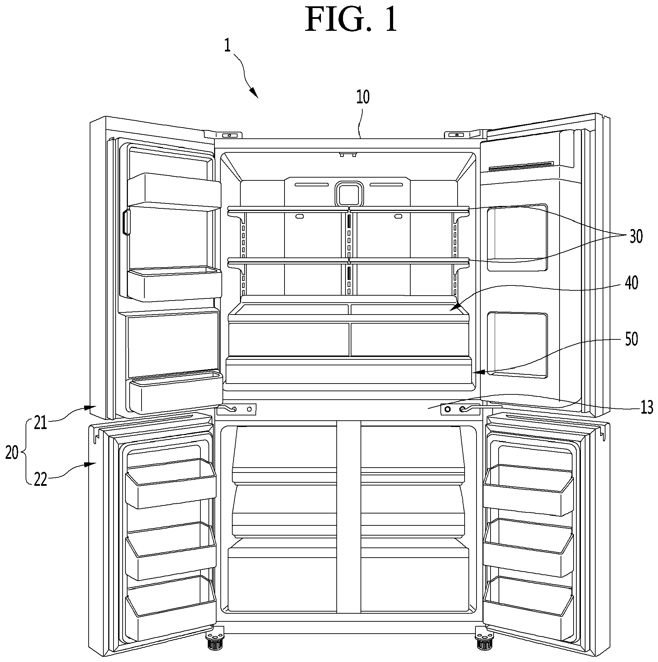

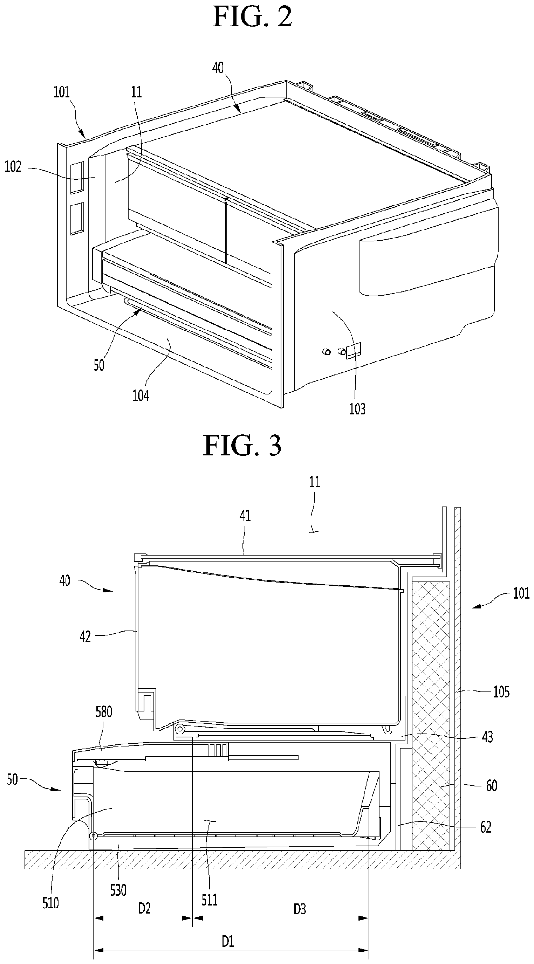

Fig. 1 is a perspective view illustrating a refrigerator in a state where a refrigerator door is opened according to an embodiment of the present invention, Fig. 2 is a perspective view illustrating a pantry assembly in the refrigerating chamber and an upper drawer assembly, and Fig. 3 is a side view illustrating a disposition of the pantry assembly and a drawer assembly of Fig. 2.

Referring to Figs. 1 to 3, a refrigerator 1 according to an embodiment of the present invention includes cabinet 10 for forming a storage chamber, and may include a refrigerator door 20 for opening and closing the cabinet 10.

The storage chamber may be partitioned into a refrigerating chamber 11 and a freezing chamber 12 by the partitioning portion 13 in the cabinet 10. In Fig. 1, as an example, the freezing chamber 12 is located below the refrigerating chamber 11, but the present invention is not limited thereto.

The refrigerator door 20 may include a refrigerating chamber door 21 for opening and closing the refrigerating chamber 11 and a freezing chamber door 22 for opening and closing the freezing chamber 12.

Although not limited, a pair of refrigerating chamber doors 21 disposed on the left and right sides can open and close the refrigerating chamber 11.

In addition, a pair of freezing chamber doors 22 disposed on the left and right sides can open and close the freezing chamber 12.

The storage chamber is provided with a pantry assembly 50 in which a food receiving space is exposed forward by pulling-in and out. In the pantry assembly 50, a receiving space having an area larger than a pulled-out area is exposed to the outside when the pantry assembly 50 is pulled out.

The position where the pantry assembly 50 is provided is not limited, but the following description will be made about the disposition of the pantry assembly 50 in the refrigerating chamber 11. So, it can be provided in the freezing chamber or any other storage chamber of the refrigerator.

The pantry assembly 50 may be positioned at the lowermost portion of the refrigerating chamber 11.

The left and right widths of the pantry assembly 50 may be substantially the same as the left and right widths of the refrigerating chamber 11.

The cabinet 10 includes an inner case 101 forming the refrigerating chamber 11. The inner case 101 includes pair of side walls 102 and 103 spaced left and right and may include a bottom wall 104 connecting the pair of side walls 102 and 103.

The pantry assembly 50 may be fixed to the pair of side walls 102 and 103.

The pantry assembly 50 includes a receiving member 510 forming a receiving space 511, a supporter assembly connected to the receiving member 510 and guiding the pulling-in and out of the receiving member 510, and a cover member 580 connected to the supporter assembly. Te cover member 580 is provided for opening and closing the receiving space 511 being interlocked or coupled with the receiving member 510.

The supporter assembly may include a pair of supporters 530 connected to the receiving member 510 to support the receiving member 510. Preferably, there is a supporter 530 at each side of the receiving member 510, so at the left and right side wall 103, 104.

The pair of supporters 530 may be installed on each of the pair of side walls 102 and 103.

The cover member 580 may cover a portion of the receiving space 511. The drawer assembly 40 may be positioned above the cover member 580. However, it is possible that there is only a shelf above the pantry assembly 50, which is at least partly covering the upper opening of the receiving member 510.

At least one shelf 30 may be provided above the drawer assembly 40 in the refrigerating chamber 11. Food can be placed on the shelf 30.

The evaporator 60 may be positioned in front of the rear wall 105 in the inner case 101 and the evaporator 60 may be covered by a cool air duct 62 for supplying cool air to the refrigerating chamber 11.

The drawer assembly 40 and the pantry assembly 50 may be positioned in front of the cool air duct 62 to receive cool air.

The drawer assembly 40 may include a drawer 42 which forms a receiving space and can be pulled out forward, a drawer supporter 43 which supports a lower side of the drawer 42, and a drawer cover 41 covering the upper side of the drawer 42.

The drawer supporter 43 may be fixed to the inner case 101 and may cover a portion of the upper side of the receiving member 510.

Therefore, according to the invention, the cover member 580 is a movable moving cover, and the drawer supporter 43 may be a fixed cover which is kept in a fixed state.

In addition, food can be placed on the drawer cover 41, and can function as the shelf 30.

Fig. 3 illustrates a state where the receiving member has moved to or is positioned in the pulling-in completion position.

The maximum pull out length of the receiving space 511 of the receiving member 510 in the front and rear direction is D1. As illustrated in Fig. 3, the cover member 580 covers at least a portion of the receiving space 511 at a pulling-in completion position of the receiving member 510. For example, the cover member 580 covers the upper front space of the receiving space 511 with respect to the front and rear of the receiving space 511.

The front and rear length of the space covered by the cover member 580 of the receiving space 511 is D2 and the front and rear length of the space which is not covered by the cover member 580 is D3. At this time, D3 is larger than D2.

The space which is not covered by the cover member 580 can be covered by the drawer supporter 43 or a shelf or any other part of the refrigerator.

The front and rear length of the draw supporter 43 may be formed to be longer than the front and rear length of the cover member 580.

The cover member 580 and the drawer supporter 43 may be overlapped in the vertical direction in the pulling-in completion position of the receiving member 510.

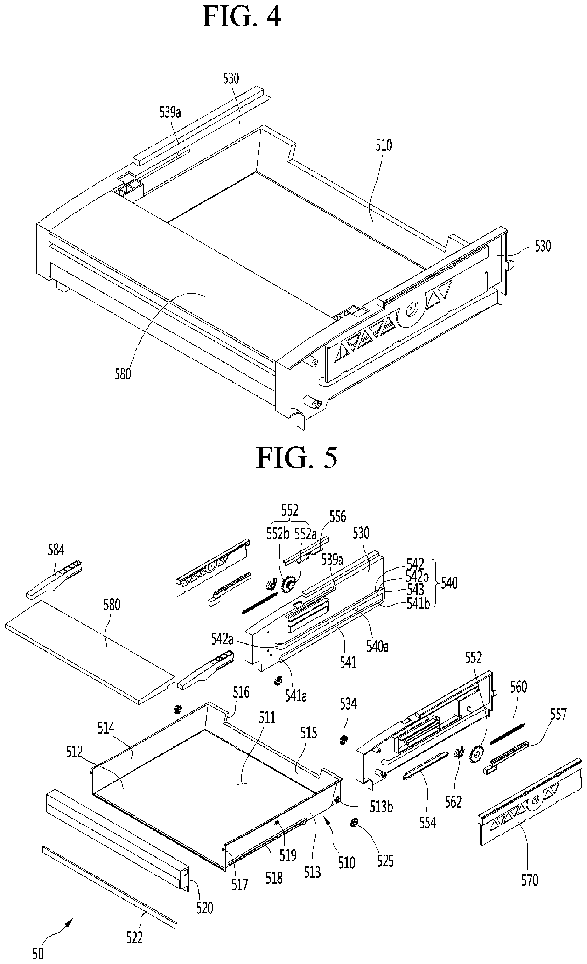

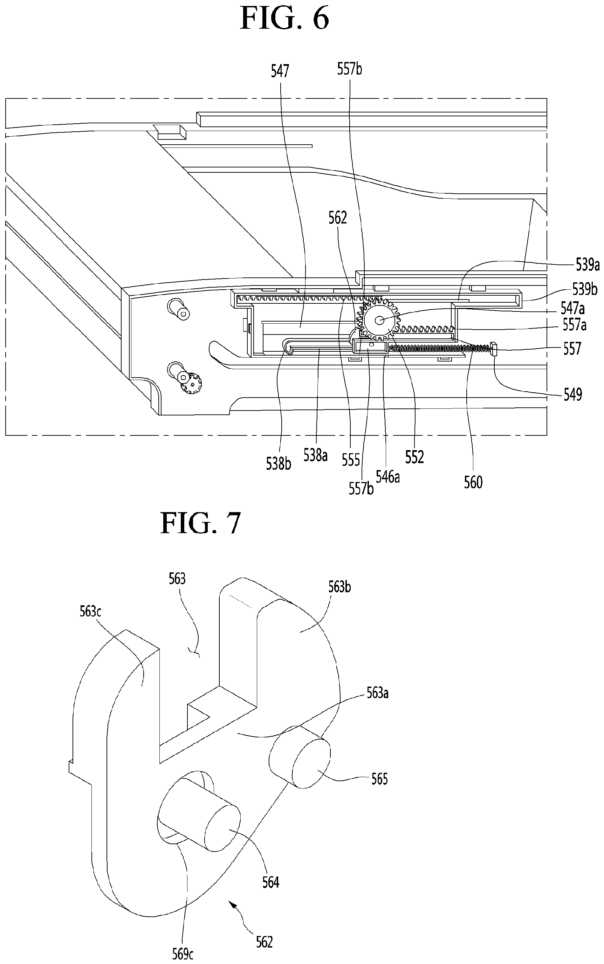

Fig. 4 is a perspective view illustrating the pantry assembly according to an embodiment of the present invention, Fig. 5 is an exploded perspective view illustrating the pantry assembly of Fig. 4, and Fig. 6 is a perspective view illustrating a state where a side cover is separated from the pantry assembly of Fig. 4.

Referring to Figs. 4 to 6, the receiving member 510 may form the receiving space 511. The receiving member 510 may be formed in a rectangular parallelepiped shape having an opened top surface. So the receiving member 510 may have a box shape having an open top surface.

The receiving member 510 may include a bottom wall 512, a pair of side walls 513 and 514 extending upward from both side ends of the bottom wall 512, and a rear wall 515 connecting rear ends of a pair of side walls 513 and 514.

The receiving member 510 may further include a front opening 517 and the front opening 517 may be covered by a front cover 520 coupled to the front surface of the receiving member 510. A deco cover 522 may be coupled to a lower portion of the front cover 520.

A cool air slot 516 for passing cool air may be formed in the rear wall 515 of the receiving member 510. The cool air slot 516 may be formed as a downwardly extending recess at the upper end of the rear wall 515.

Each of the pair of side walls 513 and 514 of the receiving member 510 may be provided with a guide protrusion 518 extending in the front and rear direction. The guide protrusions 518 extend rearward from the front end portion of each of the side walls 513 and 514 and extend to a position spaced apart from the rear ends of the side walls 513 and 514 by a predetermined distance. So the guide protrusion 518 are shorter than a length of side wall 513, 514.

The length of the guide protrusion 518 can be determined in consideration of a distance for pulling out the receiving member 510.

A first roller supporter 513b to which the first roller 525 is coupled may be formed on each of the side walls 513 and 514 of the receiving member 510.

The first roller supporter 513b may be positioned behind the guide protrusions 518 at the respective side walls 513 and 514. In other words, the first roller supporter 513b may be positioned behind the guide protrusion 518 and may be formed on a position adjacent to the rear ends of each of the side walls 513 and 514.

The pair of supporters 530 supports the receiving member 510 and/or can guide pulling-in and out of the sliding of the receiving member 510.

The guide rails 540 for guiding the first roller 525 of the receiving member 510 are provided on the surfaces of the pair of supporters 530 facing each other.

The guide rails 540 protrude from the respective supporters 530 to receive the first rollers 525. At this time, the guide rails 540 protrude in a direction approaching each other at the respective supporters 530.

The guide rail 540 include a first guide portion 541 and a second guide portion 542 spaced apart from the first guide portion 541 above the first guide portion 541.

A space 540a is formed between the first guide portion 541 and the second guide portion 542 and the first roller 525 rotates in a state of being received in the space 540a, and can move along the guide rails 540.

At this time, the vertical length/distance or space between the first guide portion 541 and the second guide portion 542 may be equal to or larger than the diameter of the first roller 525.

In any case, the first roller 525 can move along the upper surface of the first guide portion 541 while rotating when the receiving member 510 is pulled in and out, in a state where the first roller 525 is seated on the upper surface of the first guide portion 541.

Each of the guide portions 541 and 542 may include an inlet inclined portion 541a and 542a inclined in a direction away from each other, such that the first roller 525 of the receiving member 510 can be easily pulled in the space 540a of the guide rail 540 during the assembling process.

In a process in which the receiving member 510 is pulled, in a state where the first roller 525 is received in a space 540a of the guide rail 540, each of the guide portions 541 and 542 include may inclined surfaces 541b and 542b inclined downward toward the rear side, so that the receiving member 510 can be easily moved to the pulling-in completion position.

When the first roller 525 is positioned on each of the inclined surfaces 541b and 542b while moving along the upper surface of the first guide portion 541, the first roller 525 is inclined downward, and according to this, the receiving member 510 to which the first roller 525 is connected is inclined downward to move to the pulling-in completion position.

In the present embodiment, the rear end portion of the first guide portion 541 and the rear end portion of the second guide portion 542 may be connected by a connection portion 543.

The first roller 525 keeps a state where the first roller 525 is in contact with the inclined surfaces 541b and 542b in a state where the receiving member 510 is moved to the drawn-in complete position. The first roller 525 may be in contact with the connection portion 543.

Accordingly, the connection portion 543 can serve as a stopper for stopping the receiving member 510 in a state where the receiving member 510 is moved to the pulling-in completion position.

Each of the side walls 513 and 514 of the receiving member 510 may be provided with a transmission protrusion 519 for transmitting the movement force of the receiving member 510 to the cover member 580.

The transmission protrusions 519 may be positioned above the guide protrusions 518 and/or may be approximately positioned at a central portion side in the front and rear direction of the respective side walls 513 and 514.

When the receiving member 510 is slid in the first direction for pulling out the receiving member 510, the cover member 580 may slide in a second direction opposite to the first direction so that the receiving space 511 of the receiving member 510 is opened.

At this time, the cover member 580 can be moved by receiving the movement force of the receiving member 510.

Therefore, in the present embodiment, the supporter assembly may further include a transmission unit for transmitting the movement force of the receiving member 510 to the cover member 580.

The transmission unit is supported by the supporter 530 and may be connected to the cover member 580.

The transmission unit transmits the movement force of the receiving member 510 to the cover member 580 in some sections in a process of pulling in the receiving member 510 and does not transmit the moving force of the receiving member 510 to the cover member 580 in other sections.

For example, the transmission unit transmits the movement force of the receiving member 510 to the cover member 580 until the receiving member 510 is drawn out by a predetermined distance from the pilling-in completion position.

In a case where the receiving member 510 is pulled in by a distance greater than the predetermined distance from the pulling-in completion position, the transmission unit blocks that the movement force of the receiving member 510 is transmitted to the cover member 580.

Specifically, the transmission unit includes a connection member 562 which is connected to the transmission protrusion 519 of the receiving member 510, a first rack 557 to which the connection member 562 is rotatably connected, a transmission gear 552 connected to the first rack 557, and a second rack 554 connected to the transmission gear 552 and coupled to the cover member 580.

The transmission unit can be covered by a unit cover 570. The unit cover 570 may be coupled to the supporter 530. The unit cover 570 may be positioned at a side of the supporter being opposite to the side of the guide rail 540 with respect to the supporter 530 to cover the transmission unit.

In addition, the transmission unit may further include an elastic member 560 connected to the first rack 557.

The first rack 557 may include a first rack gear portion 557a connected to the transmission gear 552, as a straight rack moving in a linear direction. The gears of the first rack gear portion 557a may be disposed so as to face upward.

The first rack 557 may further include a coupling body 557b which be disposed to be bent downward from the first rack gear portion 557a and to which the connection member 562 is coupled.

The connection member 562 may be rotatably connected to the coupling body 557b. One end of the elastic member 560 may be connected to the coupling body 557b. The supporter 530 may have a fixing portion 549 to which the other end of the elastic member 560 is connected.

The elastic member 560 may be a coil spring, for example and may extend in the horizontal direction in a state where the elastic member 560 is connected to the coupling body 557b and the fixing portion 549.

The elastic member 560 accumulates elastic force in a process of pulling out the receiving member 510 and provides an elastic force to the receiving member 510 in a process of pulling the receiving member 510, thereby assisting the pulling-in of the receiving member 510.

The transmission gear 552 may be a multi-stage gear. In other words, the transmission gear 552 may include a first gear 552a having a first diameter, and a second gear 552b having a second diameter larger than the first diameter.

The first gear 552a and the second gear 552b are pinion gears whose rotational centers coincide with each other. The rotation center line of the transmission gear 552 may extend in the horizontal direction.

The first gear 552a can be engaged with the first rack 557. For example, the first gear 552a may be connected to the first rack gear portion 557a at an upper side of the first rack gear portion 557a.

This is to reduce the lateral thickness in the horizontal direction by the transmission unit. As the lateral thickness of the transmission unit in the horizontal direction increases, since the volume of the receiving member 510 decreases, the volume reduction amount of the receiving member 510 can be minimized by reducing the thickness of the transmission unit in the horizontal direction.

The second rack 554 may include a second rack gear portion 555 which engages with the second gear 552b as a linear rack which moves in a linear direction.

The second rack gear portion 555 is engaged with the second gear 552b on the upper side of the second gear 552b. This is to reduce the lateral thickness in the horizontal direction by the transmission unit.

The gear ratio of the first gear 552a and the second gear 552b may be, for example, 1: 2. Therefore, the length of the second rack gear portion 555 is longer than the length of the first rack gear portion 557a.

According to the present embodiment, the cover member 580 can be moved by a length longer than the moving length of the receiving member 510, so that the opening area of the receiving space 511 of the receiving member 510 can be increased.

The receiving member 510 is positioned on one side of the supporter 530 and the transmission unit is positioned on the other side of the supporter 530. This is to prevent the transmission unit from being exposed in a process of pulling in and out the receiving member 510.

Since the receiving member 510 and the transmission unit are positioned opposite to each other with respect to the supporter 530, so that the transmission protrusion 519 of the receiving member 510 can be connected to the transmission unit, the supporter 530 may be provided with a protrusion slot 547 through which the transmission protrusion 519 passes.

The protrusion slot 547 may extend in the longitudinal direction of the supporter 530. At this time, the longitudinal direction is the front and rear direction of the supporter 530.

The supporter 530 may further include a gear shaft 547a for rotatably supporting the transmission gear 552. The gear shaft 547a may be positioned above the protrusion slot 547.

The supporter 530 may further include a first rack guide 546a for guiding the movement of the first rack 557 in a state of supporting the lower side of the first rack 557. For example, the coupling body 557b may be supported by the first rack guide 546a.

The supporter 530 may further include a rack slot 539a through which the second rack 554 passes.

The second rack 554 may further include a cover coupling rib 556 extending in the horizontal direction. The cover coupling rib 556 can pass through the rack slot 539a.

The rack slot 539a can extend to be lengthen in a direction (for example, front and rear direction) parallel to the moving direction of the second rack 554 so as not to interfere with the cover coupling rib 556 of the second rack 554 which linearly moves.

The supporter 530 may further include a stopper 539b for restricting the movement of the second rack 554 in a process of pulling in the receiving member 510.

The stopper 539b is located behind the second rack 554 and when the cover member 580 opens the receiving space 511 in a process of pulling out the receiving member 510, the cover member 580 is stopped by restricting the movement of the second rack 554.

The position at which the cover member 580 is stopped can be substantially the opening completion position of the cover member 580.

The supporter 530 may further include a guide slot for guiding the movement of the connection member 562. The guide slot may be a groove shape formed by being recessed in the supporter 530.

The guide slot may include a first slot 538a for guiding the linear movement of the connection member 562 and a second slot 538b which is bent at the front end of the first slot 538a and extends downward.

The first slot 538a is formed in a linear shape. The second slot 538b extends inclinedly at a front end of the first slot 538a and extends inclinedly rearward at the first slot 538a.

As will be described later, the connection member 562 may move along the first slot 538a and may be rotated in a process of moving from the front end portion of the first slot 538a toward a side of the second slot 538b.

A connection frame 584 can be coupled to both sides of the cover member 580. The connection frame 584 is connected to the transmission unit to receive the movement force of the receiving member 510 through the transmission unit.

The connection frame 584 prevents the cover member 580 from being damaged in a process of receiving the movement force of the receiving member 510.

The cover member 580 may be formed in a form of a thin plate. When the cover member 580 is directly connected to the transmission unit, there is a possibility that the cover member 580 may be broken in a process of transmitting the moving force to the cover member 580, but, according to the present embodiment, this phenomenon can be prevented.

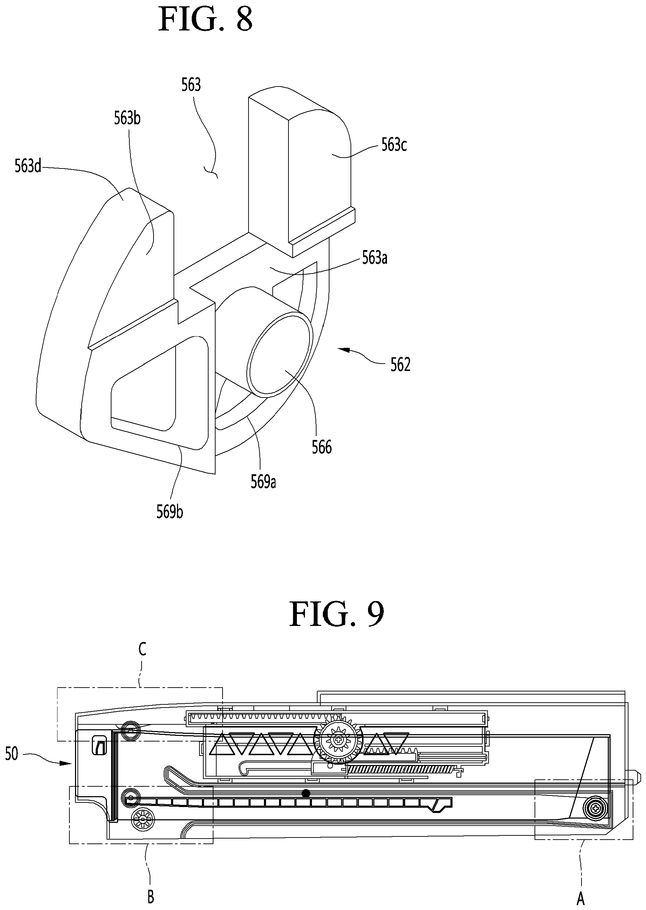

Fig. 7 and Fig. 8 are perspective views illustrating a connection member according to an embodiment of the present invention.

Referring to Figs. 7 and 8, the connection member 562 may include a space portion 563 formed by a portion of the upper surface thereof being recessed downward. The space portion 563 may receive the transmission protrusion 519 of the receiving member 510.

The connection member 562 may include a front body 563b forming the space portion 563, a rear body 563c spaced apart from the front body 563b, and a lower body 563a forming a bottom of the space portion 563.

Therefore, the transmission protrusion 519 can be received in the space portion 563 between the front body 563b and the rear body 563c.

A first protrusion 564 and a second protrusion 565 which are spaced apart from each other in the horizontal direction may be provided on one surface of the lower body 563a.

The first protrusions 564 and the second protrusions 565 may be arranged in a direction parallel to the linear movement direction of the connection member 562, for example.

The first protrusions 564 may be disposed to overlap with the space portion 563 in the vertical direction. The second protrusions 565 may be positioned in front of the first protrusions 564 and may be disposed not to overlap with the space portion 563 in the vertical direction.

A rack coupling shaft 566 for coupling with the first rack 557 may be provided on the other surface of the lower body 563a. For example, the rack coupling shaft 566 may be rotatably coupled to the coupling body 557b of the first rack 557.

To this end, the rack coupling shaft 566 may be formed in a cylindrical shape so as to protrude from the other surface of the lower body 563a and so that the connection member 562 is be rotatable with respect to the first rack 557.

The rack coupling shaft 566 may be positioned on the opposite side of the first protrusion 564 with respect to the lower body 563a. In other words, the first protrusions 564 may overlap with the rack coupling shaft 566 in the lateral horizontal directions.

The first protrusion 564 and the second protrusion 565 may be received in the guide slot. For example, the first protrusion 564 and the second protrusion 565 may be located in the first slot 538a at the pulling-in completion position of the receiving member 510.

The positional relationship of the first protrusion 564 and the second protrusion 565 in the guide slot in a process of pulling in the receiving member 510 will be described later with reference to the drawings.

The lower body 563a may further include reinforcing grooves 569a, 569b, and 569c which are recessed so as to increase the strength of the lower body 563a while reducing the weight of the connection member 562. Although not limiting, one reinforcing groove 569a may be positioned around the rack coupling shaft 566.

In addition, another reinforcing groove 569c may be disposed around the first protrusion 564.

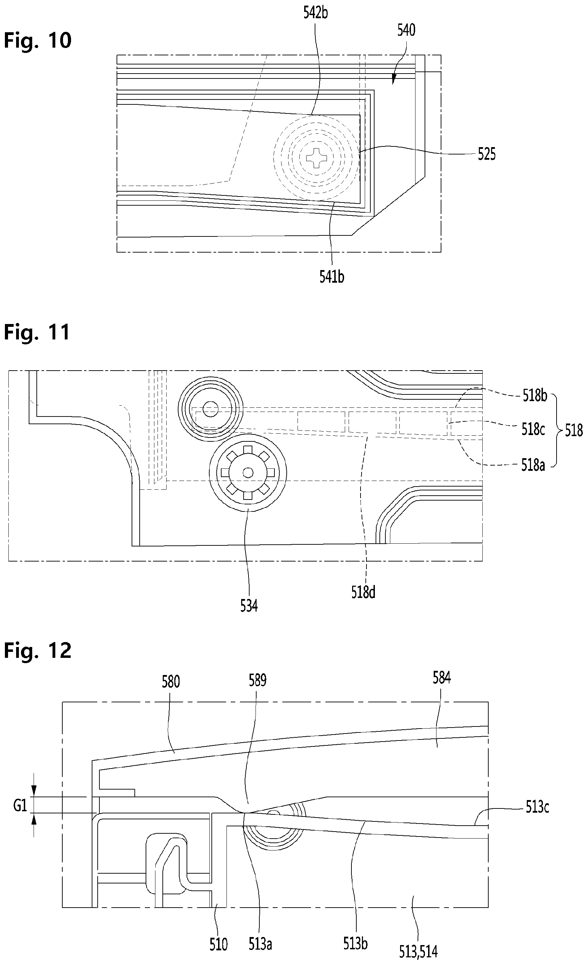

Fig. 9 is a side view illustrating a pantry assembly according to an embodiment of the present invention, Fig. 10 is an enlarged view illustrating portion A in Fig. 9, Fig. 11 is an enlarged view illustrating portion B in Fig. 9, Fig. 12 is an enlarged view illustrating portion C in Fig. 9.

First, referring to Figs. 9 and 10, according to the invention, the elastic force of the elastic member 560 acts to the receiving member 510 in a process of pulling in the receiving member 510, thereby allowing the receiving member 510 to be automatically be pulled in.

In the present embodiment, "automatic pull-in" means that the receiving member 510 can be pulled in even if the user removes the pushing force of the receiving member 510.

When the elastic force (elastic modulus) of the elastic member 560 is increased as described above, the receiving member 510 can be automatically moved to the pulling-in completion position in a specific section in a process in which the receiving member 510 is pulled in. However, a collision noise may be generated in a process in which the receiving member 510 reaches the pull-in completion position. In addition, a force required by the user in the process of pulling out the receiving member 510 is large.

Therefore, in the present embodiment, the pantry assembly 50 may further include a pulling-in guide structure which compensates for problems when using the elastic member 560. Due to the above-described pulling-in guide structure, a small amount of force is required in a process of pulling in the receiving member 510, and the collision noise in the pulling-in process can be reduced.

The pulling-in guide structure may include the inclined surfaces 541b and 542b of the guide rail 540 as described above.

When the first roller 525 of the receiving member 510 moves to the space between the inclined surfaces 541b and 542b while moving along the upper surface of the first guide portion 541, the roller 525 is rotated while being inclined downwardly by the inclined surfaces 541b and 542b so that the receiving member 510 can be stably and automatically moved to the pulling-in completion position.

in a case of the present embodiment, the inclined surfaces 541b and 542b of the guide rail 540 are inclined downward with respect to the pulling-in direction of the receiving member 510. Therefore, when the receiving member 510 is pulled out, the first roller 525 is lifted along the inclined surfaces 541b and 542b.

Since the first roller 525 is positioned on the rear end portion of the side walls 513 and 514 of the receiving member 510, although the first roller 525 is lifted along the inclined surfaces 541b and 542b, the front portion of the receiving member 510 may not be lifted due to the load of the receiving member 510.

In this case, when the receiving member 510 linearly moves in an inclined state without being linearly moved in a horizontal direction, the load of the receiving member 510 acts as a moment of the first rack 557 and thus there is a possibility that the receiving member 510 is not smoothly pulled in and out.

Therefore, this embodiment of the invention further includes a horizontal keeping structure which is lifted or lowered in a state the receiving member 510 forms a horizontal state when the first roller 525 is lifted or lowered along the inclined surfaces 541b and 542b.

Specifically, referring to Figs. 9 and 11, the supporter 530 may be provided with a second roller 534 for supporting the guide protrusion 518 of the receiving member 510.

The second roller 534 may be installed on surfaces facing each other in a pair of supporters 530.

The second roller 534 may be positioned in front of the guide rail 540 in the supporter 530.

The second roller 534 is in contact with the lower surface of the guide protrusion 518 and rotates by friction with the guide protrusion 518 in a process of pulling-in and out the receiving member 510, and thus facilitating the pulling-in and out of the receiving member 510.

The guide protrusion 518 may include a lower rib 518a, an upper rib 518b positioned above the lower rib 518a, and a plurality of connection ribs 518c which connect the lower rib 518a and the upper rib 518b to each other.

The lower rib 518a may be in contact with the second roller 534 in a process of pulling-in and out the receiving member 510.

The upper rib 518b may extend in a linear shape in the horizontal direction.

A portion of the lower rib 518a may extend in a straight line in the horizontal direction and may be parallel to the upper rib 518b. The other portion of the lower rib 518b may be inclined upward toward the front. The lower rib 518a may include an inclined rib 518d. In other words, the horizontal keeping structure may include the inclined ribs 518d.

At this time, the inclination angle of the inclined ribs 518d may be the same as the inclination angle of the inclined surfaces 541b and 542b of the guide rails 540.

The front end portion of the inclined rib 518d may be connected to the upper rib 518b. The inclined ribs 518d and the upper ribs 518b may be connected by one or more connection ribs 518c.

Therefore, when the first roller 525 is lifted or lowered along the inclined surfaces 541b and 542b, the front side of the receiving member 510 is lifted or lowered together by the inclined ribs 518d.

Next, referring to Figs. 9 and 12, the cover member 580 or the connection frame 584 may include a spacer rib 589 protruding downward. For example, the spacer ribs 589 may protrude downward from the connection frame 584.

The spacer ribs 589 can be in contact with the upper surfaces of the side walls 513 and 514 of the receiving member 510 at the pulling-in completion position of the receiving member 510. For example, the spacer ribs 589 may be in contact with a side of the front end portion of the upper surface of the side walls 513 and 514.

The cover member 580 and the upper surface of the receiving member 510 may be spaced apart from each other by the spacer ribs 589 at the pulling-in completion position of the receiving member 510.

In other words, a gap G1 may exist between the cover member 580 and the receiving member 510. The gap G1 allows the refrigerating chamber 11 and the receiving space 511 of the receiving member 510 to communicate with each other at the pulling-in completion position of the receiving member 510. Therefore, cold air can circulate through the receiving space 511 and the refrigerating chamber 11.

The refrigerator 1 may further include a temperature sensor (not illustrated) for sensing the temperature of the receiving space 511. The amount of cool air supplied to the receiving space 511 may be determined based on the temperature sensed by the temperature sensor.

In a case where there is no gap between the cover member 580 and the receiving member 510, since the cool air stagnates in the receiving space 511 and the temperature sensed by the temperature sensor is lowered, the cold air is not allowed to flow into the receiving member 511. When the temperature of the receiving space 511 sensed by the temperature sensor increases, cool air is again supplied to the receiving space 511.

As described above, when the cold air supply and supply interruption are repeated, the temperature change width of the food stored in the receiving space 511 becomes large, and the freshness of the food becomes low.

On the other hand, according to the present embodiment, since the receiving space 511 and the refrigerating chamber 11 communicate with each other by the gap G1 existing between the cover member 580 and the receiving member 510 and thus the cool air can be circulated, the temperature change width of the food stored in the receiving space 511 can be minimized and freshness can be kept.

In a case of the present embodiment, the receiving member 510 is lifted by the inclined surfaces 541b and 542b and the inclined ribs 518d in a process of pulling-out of the receiving member 510.

In a case where the sidewalls 513 and 514 of the receiving member 510 have the same height, there is a problem that the sidewalls 513 and 514 interferes with the spacer ribs 589 in the process of pulling-out of the receiving member 510.

Therefore, in the present embodiment, in order to prevent the side walls 513 and 514 of the receiving member 510 from interfering with the spacer ribs 589 in the process of pulling-out of the receiving member 510, each of the side walls 513 and 514 of the receiving member 510 may include a first wall 513a having a horizontal upper surface, an inclined wall 513b having an upper surface inclined downward as it goes backward from the first wall 513a, and a second wall 513c which extends rearward from the inclined wall 513b and has a horizontal upper surface.

The height of the second wall 513c is equal to the minimum height of the inclined wall 513b and the height of the first wall 513a is equal to the maximum height of the inclined wall 513b.

At this time, the inclination angle of the upper surface of the inclined wall 513b may be the same as the inclination angle of the inclined surfaces 541b and 542b of the guide rail 540.

Thus, according to the present embodiment, in a process of the pulling-in of the receiving member 510, the receiving member 510 can be stably moved to the pulling-in completion position by the inclined surfaces 541b and 542b of the guide rail 540.

In addition, in a process of pulling-out of the receiving member 510, the receiving member 510 can be moved in a state of being kept horizontal without being inclined forward and backward by the inclining rib 518d and the inclined wall 513b and thus there is an advantage that stable pulling-out is possible.

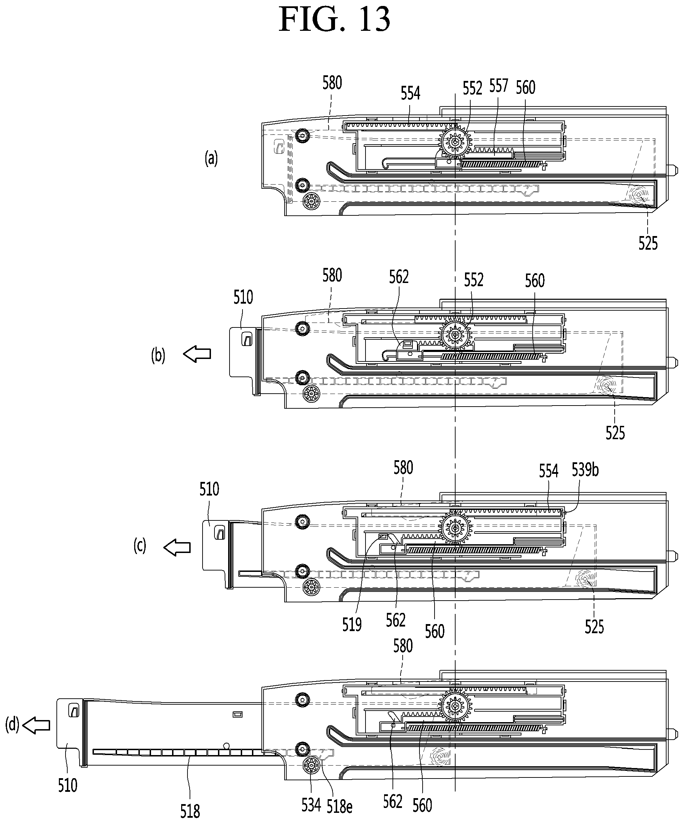

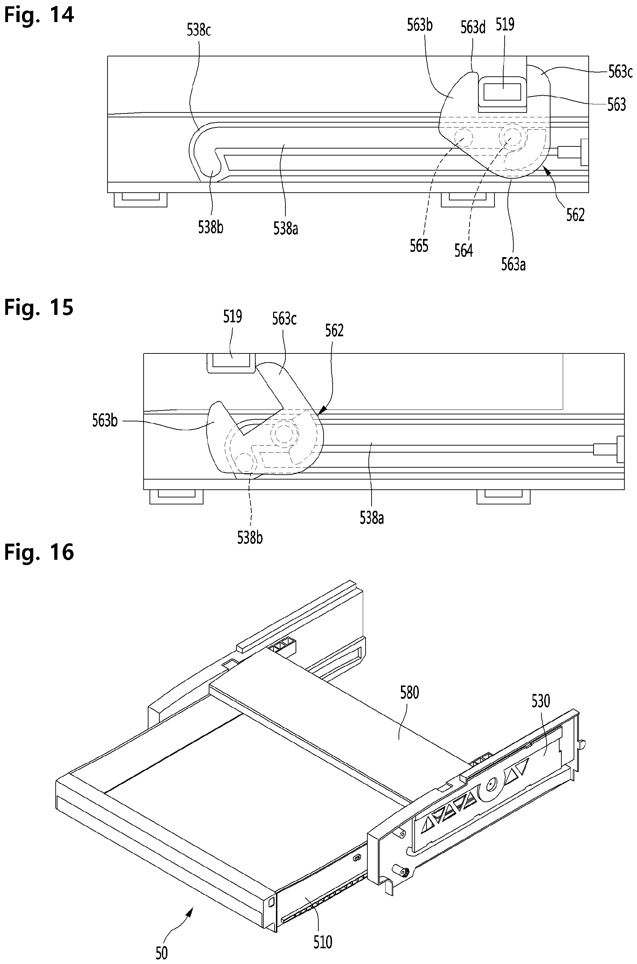

Fig. 13 is a view illustrating a process of pulling out a receiving member according to an embodiment of the present invention in stages. Fig. 14 is a view illustrating a state of the connection member at a pulling-in completion position of the receiving member, and Fig. 15 is a view illustrating a state where a connection member is rotated according to an embodiment of the present invention. Fig. 16 is a perspective view illustrating a state where the receiving member has moved to the pulling-out completion position.

Fig. 13 (a) illustrates a state where the receiving member is located at the pulling-in completion position, and Fig. 13 (b) illustrates a state where the receiving member is pulled out by the first distance at the pulling-in completion position.

Fig. 13 (c) illustrates a state where the receiving member is pulled out by a second distance and the cover member has moved to the opening completion position, and Fig. 13 (d) illustrates a state where the receiving member has moved to the pulling-out completion position.

Referring to Figs. 9 to 16, the transmission protrusion 519 of the receiving member 510 is positioned at the space portion 563 of the connection member 562 at the pulling-in completion position of the receiving member 510.

The first protrusion 564 and the second protrusion 565 of the connection member 562 are located in the first slot 538a.

In this state, when the receiving member 510 is pulled toward the user to pull out the receiving member 510, as illustrated in Fig. 13 (b), the receiving member 510 is moved linearly in the horizontal direction after being lifted to a predetermined height by the inclined surface 541b and 542b of the guide rail 540.

At this time, in a case where the first protrusion 564 and the second protrusion 565 of the connection member 562 are positioned in the first slot 538a, in the process of pulling-out of the receiving member 510, the rotation of the connection member 562 is restricted and the connection member 562 can be linearly and moved stably.

In a case where the connection member 562 linearly moves, the first rack 557 connected to the connection member 562 linearly moves in the first direction (arrow direction in Fig. 13).

When the first rack 557 moves in the first direction, the transmission gear 552 is rotated in the clockwise direction in the drawing, and the rotation of the transmission gear 552 causes the second rack 554 to be linearly moved in a second direction opposite to the first direction.

Then, the cover member 580 moves in the second direction together with the second rack 554, so that the receiving space 511 of the receiving member 510 is opened.

In the present embodiment, the upper surface of the transmission protrusion 519 is positioned lower than the upper ends of the front body 563b and the rear body 563c forming the space portion 563.

The height of the front body 563b is lower than the height of the rear body 563c. Therefore, the upper surface of the transmission protrusion 519 is positioned lower than the upper end 563d of the front body 563b.

This is because the receiving member 510 is lifted by the inclined surfaces 541b and 542b of the guide rail 540 at the initial pulling-out of the receiving member 510, so that the transmission protrusion 519 prevents from being separated from the space portion 563.

In addition, in order to prevent the transmission protrusion 519 from being separated, the upper surface of the transmission protrusion 519 is positioned at a position lower than the upper end 563d of the front body 563b at a position in which the transmission protrusion 519 is lifted.

Therefore, even if the transmission protrusion 519 is lifted due to the lifting of the receiving member 510, the transmission protrusion 519 is kept in a state where the transmission protrusion 519 is positioned at the space portion 563, and thus the connection member 562 can be moved together when the transmission protrusion 519 is moved as illustrated in Fig. 13.

In a process of pulling-out of the receiving member 510, the elastic member 580 is tensioned to accumulate the elastic force.

In other words, when the receiving member 510 is pulled out, the transmission protrusion 519 is in contact with the front body 563b of the connection member 562 to push the front body 563b forward.

Referring to Figs. 13 (c) and 14, when the second rack 554 is in contact with the stopper 539b in a process of pulling-out of the receiving member 510, the moving of the second rack 554 is restricted, and the cover member 580 is stopped.

In the present embodiment, the position of the cover member 510 when the second rack 554 contacts the stopper 539b may be referred to as an opening completion position.

If the movement force of the receiving member 510 is continuously transmitted to the cover member 580 in a state where the cover member 580 is stopped, the transmission unit and/or the cover member 580 can be broken.

Therefore, the second protrusion 565 of the connection member 562 is aligned with the second slot 538b just before the cover member 580 is moved to the opening completion position and stopped. In this state, when the receiving member 510 is further pulled forward, the second protrusion 565 is moved to the second slot 538b, and the connection member 562 is rotated in this process.

The connection member 562 is rotated around the rack coupling shaft 566. The guide slot may include a curved guide surface 538c which connects the first slot 538a and the second slot 538b to each other so that the second protrusion 565 smoothly moves into the second slot 538b in the first slot 538a.

When the connection member 562 is rotated, the height of the front body 563b of the connection member 562 is lowered so that the front body 563b is deviated from the moving path of the transmission protrusion 519.

Therefore, the transmission protrusion 519 can continuously move in the first direction without interfering with the front body 563b. On the other hand, the moving force of the transmission protrusion 519 is no longer transmitted to the connection member 562.

Therefore, in a state where the cover member 580 is stopped, the receiving member 510 can move in the first direction.

The elastic force of the elastic member 560 acts to the connection member 562 in a state where the second protrusion 565 is moved to the second slot 538b. The elastic member 560 acts as a force for pulling the connection member 562.

In a case of the present embodiment, the second slot 538b is inclined downward from the front end portion of the first slot 538a toward the rear, although the elastic force of the elastic member 560 acts to the connection member 562 in a state where the second protrusion 565 is positioned to the second slot 538b, the connection member can be prevented from being rotated clockwise with reference to Fig.13 by the elastic member 560.

Referring to Fig. 13 (d), in a state where the cover member 580 is stopped, the receiving member 510 can be continuously pulled out in the first direction. The pulling-out of the receiving member 510 may be restricted by a pulling-out restricting portion 518e provided in the receiving member 510 in a process of pulling out the receiving member 510.

The position at which the pulling-out of the receiving member 510 is restricted and thus the receiving member 510 is stopped is the pulling-out completion position.

For example, the pulling-out restricting portion 518e may be provided on the guide protrusion 518. The pulling-out restricting portion 518e may protrude downward from the rear end portion of the lower rib 518a.

The pull-out restricting portion 518e is in contact with the second roller 534 of the supporter 530 at the pull-out completion position. The pulling-out restricting portion 518e may have a curved surface for surface contact with the second roller 534 so that the receiving member 510 is kept a state of being stopped at the pull-out completion position.

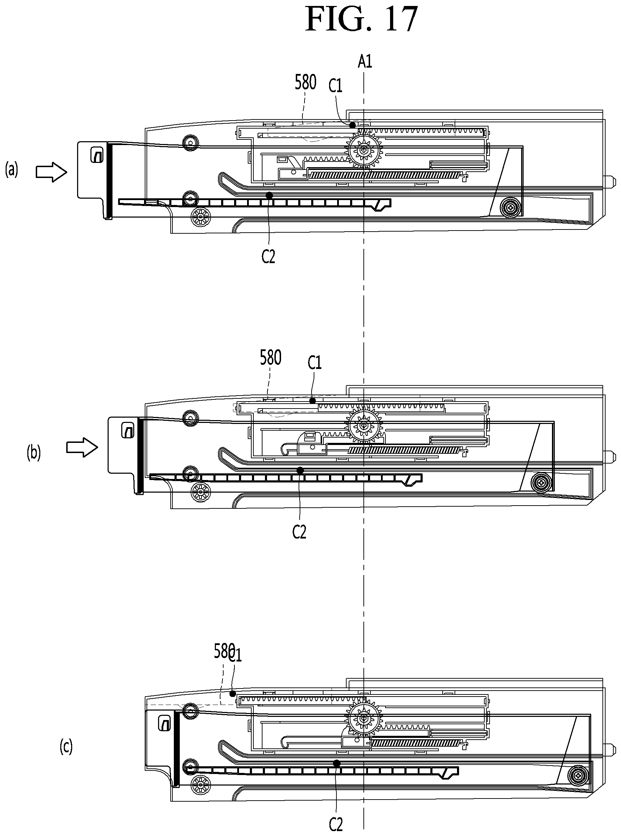

Fig. 17 is a view illustrating a relative position between the center of gravity of the receiving member and the center of gravity of the cover member.

Fig. 17 (a) illustrates a state where the cover member has moved to the opening completion position, Fig. 17 (b) illustrates a state where the first roller of the receiving member enters the inclined surface of the guide rail, and Fig. 17 (c) illustrates a state where the receiving member has moved to the pulling-out completion position.

Referring to Figs. 9 to 17, the receiving member 510 can be pushed to be moved in the second direction so that the receiving member 510 which is moved to the pulling-out completion position is pulled in.

Since the transmission protrusion 519 of the receiving member 510 is deviated from the space portion 563 of the connection member 562 at the beginning of the pulling-in of the receiving member 510, the connection member 562 keeps a state of being stopped at the time of moving of the receiving member 510. In other words, the cover member 580 keeps a state of being stopped at the opening completion position.

Next, as illustrated in Fig. 17 (a), the transmission protrusion 519 is in contact with the rear body 563c of the connection member 562 in a process in which the receiving member 510 is pulled in.

As illustrated above, since the height of the rear body 563c is higher than the height of the front body 563b, even if the connection member 562 is rotated in the process of pulling-out of the receiving member 510, the rear body 563c may be located on the path of the transmission protrusion 519.

Accordingly, as illustrated in Fig. 17 (b), when the transmission protrusion 519 pushes the rear body 563c backward, the connection member 562 is rotated in the clockwise direction in the drawing, the transmission protrusion 519 are positioned in the space portion 563 of the connection member 562.

In this state, when the receiving member 510 is continuously pulled in, the transmission protrusion 519 pushes the rear body 563c, so that the connection member 562 is moved in the second direction together with the receiving member 510.

Then, the first rack 557 moves together with the connection member 562 in the second direction, and the transmission gear 552 is rotated counterclockwise in the drawing.

As the transmission gear 552 rotates, the second rack 554 linearly moves in the first direction.

Then, the cover member 580 moves in the first direction together with the second rack 554 to close the receiving space 511 of the receiving member 510.

When the receiving member 510 rotates the connection member 562 so that the second protrusion 565 of the connection member 562 is moved to the first slot 538a in the second slot 538b, the elastic force of the elastic member 560 acts to the connection member 562 through the first rack 557.

Then, since the elastic force of the elastic member 560 is transmitted to the receiving member 510, although the user remove the force pushing the receiving member 510, the receiving member 510 is automatically moved toward the pulling-in completion position by the elastic force of the elastic member 560.

When the first roller 525 meets the inclined surfaces 541b and 542b of the guide rail 540 while the receiving member 510 is automatically slid along the pulling-in completion position, the receiving member 510 moves to the pulling-in completion position while the receiving member 510 is lowered by the inclined surface 541b and 542b.

At this time, the inclined surfaces 541b and 542b automatically move the receiving member 510 to the pulling-in completion position even if there is no force to push the receiving member 510.

Meanwhile, referring to Fig. 17 (c), the center of gravity C2 of the receiving member 510 and the center of gravity C1 of the cover member 580 at the pulling-in completion position of the receiving member 510 are located forward of the imaginary line A1 passing the rotation shaft of the transmission gear 552 vertically.

The center of gravity C2 of the receiving member 510 is located closer to the imaginary line A1 than the center of gravity C1 of the cover member 580 at the pulling-in completion position of the receiving member 510.

Referring to Fig. 17 (b), at the time when the first roller 525 of the receiving member 510 is in contact with the inclined surfaces 541b and 542b of the guide rail 540 in the process of pulling-in of the receiving member 510, the center of gravity C2 of the receiving member 510 and the center of gravity C1 of the cover member 580 are located forward of the imaginary line A1.

At the time when the first roller 525 of the receiving member 510 is in contact with the inclined surfaces 541b and 542b of the guide rail 540, the center of gravity C2 of the receiving member 510 is located forward of the center of gravity C1 of the cover member 580.

Referring to Fig. 17 (a), in a state where the cover member 580 is moved to the opening completion position, the center of gravity C2 of the receiving member 510 and the center of gravity C1 of the cover member 580 is positioned forward of the imaginary line A1 passing the rotation shaft of the transmission gear 552 vertically.

The center of gravity C2 of the receiving member 510 is located forward of the center of gravity C1 of the cover member 580 in a state where the cover member 580 is moved to the opening completion position.

In this state, the horizontal distance between the center of gravity C1 of the cover member 580 and the imaginary line A1 in the front and rear direction may be shorter than the radius of the transmission gear 552 (for example, the radius of the second gear).

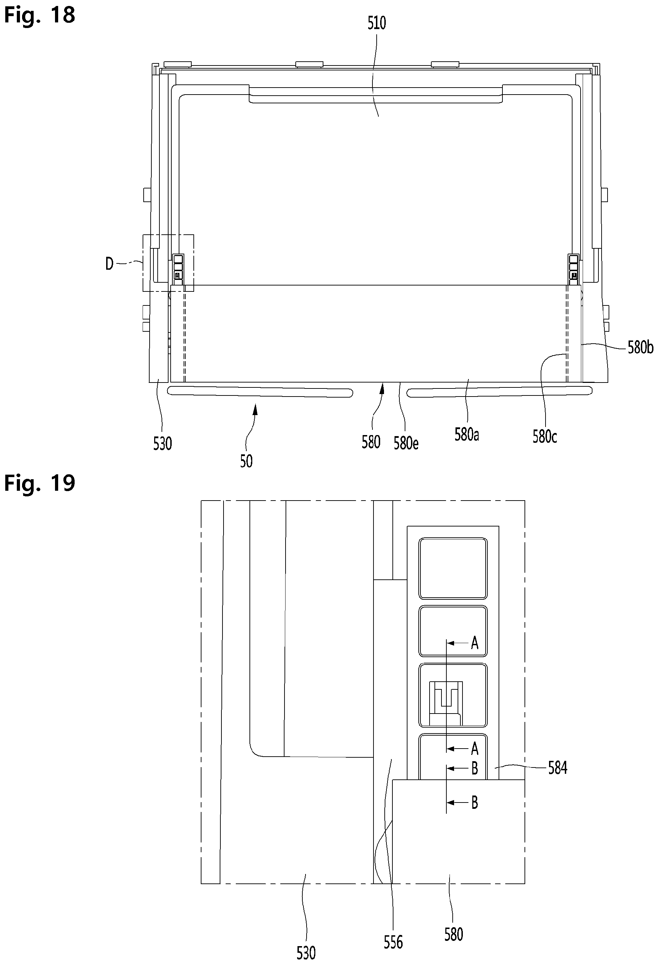

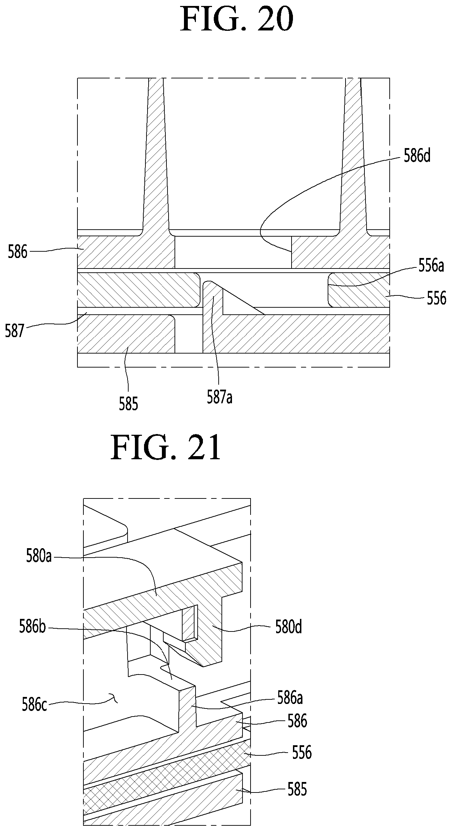

Fig. 18 is a plan view illustrating a pantry assembly according to an embodiment of the present invention, Fig. 19 is an enlarged view of Fig. 18 (D), Fig. 20 is a sectional view taken along line A-A in Fig. 19, and Fig. 21 is a sectional view taken along line B-B of Fig. 19.

Referring to Figs. 18 to 21, the connection frame 584 may be coupled to the cover member 580. The connection frame 584 may be detachably coupled to the second rack 554 in a state where the connection frame 584 is coupled to the cover member 580.

Therefore, the cover member 580 can be separated from the pantry assembly 50 in a state where the pantry assembly 50 is installed in the inner case 101.

The cover member 580 may include an upper wall 580a, a pair of outer walls 580b extending downward from both ends of the upper wall 580a, and a front wall 580e extending downward from the front end of the upper wall 580a.

The front wall 580c may connect the pair of outer walls 580b to each other.

The cover member 580 may further include a pair of inside walls 580c spaced apart from each of the pair of outside walls 580b between the pair of outside walls 580b. Each of the inside walls 580c may extend downward from the lower surface of the cover member 580.

The connection frame 584 may be received in a space between the inside wall 580c and the outside wall 580b.

The connecting frame 584 may include a rib receiving slot 587 for receiving the cover coupling rib 556 of the second rack 554. The rib receiving slot 587 may be formed to have a predetermined length from the rear end portion of the connecting frame 584 toward the front end.

The connection frame 584 may be partitioned into an upper frame 586 and a lower frame 585 with reference to the rib receiving slot 587.

The upper frame 586 may include a recessed portion 586c formed by a portion of the upper surface thereof being recessed downward. The weight of the upper frame 586 can be reduced by the recessed portion 586c, and the strength thereof can be improved.

The recessed portion 586c may be formed with a coupling wall 586a for coupling with the cover member 510. A coupling hole 586b may be formed in the coupling wall 586a.

The upper surface wall 580a of the cover member 580 may be provided with a coupling hook 580d for coupling with the coupling wall 586a.

In a process in which the connection frame 584 is received in the space between the inner wall 580c and the outer wall 580b, the coupling hook 580d is received in the recessed portion 586c and is hooked to the coupling hole 580b of the coupling wall 586a.

A hook hole 556a is formed in the cover coupling rib 556 of the second rack 554 and the lower frame 585 may include a frame hook 587a for hooking the hook hole 556a.

In a process in which the cover coupling rib 556 is received in the rib receiving slot 587, when the frame hook 587a is hooked to the hook hole 586a, the coupling of the connection frame 584 and the second rack 554 is completed. In the connection frame 584, the upper frame 586 may be provided with an opening 586d aligned with the hook hole 586a in the vertical direction.

The user can press the frame hook 587a so that the frame hook 587a is separated from the hook hole 556a in a state where the tool is passed through the opening 586d from above the connecting frame 584. Then, the frame hook 587a may be disengaged from the hook hole 556a and thus the connecting frame 584 may be separated from the second rack 554.

In the present embodiment, the connection frame 584 and the cover member 580 may be referred to as a cover unit.

According to this embodiment, there is an advantage that the receiving member is automatically pulled in by the elastic member in a process in which the receiving member is moved from the pulling-out completion position to the pulling-in completion position and the receiving member can be automatically returned to the pulling-in completion position by the inclined surface of the guide rail.

Therefore, there is an advantage that the elastic modulus of the elastic member can be reduced, and the force required for the pulling out of the receiving member can be reduced in a process of pulling out the receiving member.

In addition, according to the present embodiment, since the diameter of the first gear connected to the connection member in the transmission gear is smaller than the diameter of the second gear connected to the cover member, there is an advantage that the sliding distance of the cover member compared to the pulling-out distance of the receiving member is increased and thus the opening area of the receiving member can be increased.

In addition, according to the present embodiment, since the guide protrusion provided on the side wall of the receiving member includes the inclined rib, when the height is changed by the inclined surface in a process in which the receiving member is pulled in and out, there is an advantage that the entire receiving member can be kept horizontal without being inclined.

In addition, in the present invention, since the connection frame is connected to the cover member and the connection frame is connected to the second rack of the transmission unit, in a process in which the cover member is operated to open and close the receiving space of the receiving member, the cover member can be prevented from being damaged.

In addition, according to the present invention, the gap between the cover member and the receiving member is formed by the cover member or the spacer rib formed on the connection frame, so that the cool air flow is smooth, and in a state where the cover member covers the receiving space, a phenomenon in which the cover member tilts forward can be prevented.

## Claims

1. A refrigerator comprising:
a cabinet (10) including an inner case (101) forming a storage chamber (11, 12); and
a pantry assembly (50) installed on both side walls (102, 103) of the inner case (101), wherein the pantry assembly (50) includes:
a receiving member (510) forming a receiving space (511), the receiving member (510) being capable of being pulled in and out from the storage chamber (11, 12);
a supporter assembly connected to the receiving member (510), the supporter assembly is configured to guide a pulling-in and out of the receiving member (510); and
a cover member (580) connected to the supporter assembly, the cover member (580) is at least partly covering the receiving space (511) and the cover member (580) is configured to move in a direction opposite to the receiving member (510) when the receiving member (510) is pulled in and out;
wherein the receiving member (510) is coupled to a first roller (525) rotatably installed at the rear end portion of the receiving member (510) both side walls (513, 514) of the receiving member (510);
wherein the supporter assembly includes a supporter (530) including guide rails (540) and a transmission unit installed at the supporter (530) and configured to transmit a moving force of the receiving member (510) to the cover member (580);
wherein the transmission unit includes an elastic member (560) for providing an elastic force to the receiving member (510) for supporting the pulling-in of the receiving member (510) in a process of pulling-in of the receiving member (510);
wherein the receiving member (510) includes a transmission protrusion (519) for being connected to the transmission unit, wherein the transmission unit includes:
a connection member (562) coupled to the transmission protrusion (519) of the receiving member (510),
a first rack (557) connected to the connection member (562),
a transmission gear (552) engaged with the first rack (557), and
a second rack (554) engaged with the transmission gear (552) and connected to the cover member (580); and
wherein the guide rails (540) include a first guide portion (541) and a second guide portion (542) positioned above the first guide portion (541) and forming a space (540a) together with the first guide portion (542);
**characterized in that** the space (540a) of the guide rails (540) is configured to receive the first roller (525), and each of the guide portions (541, 542) includes an inclined surface (541b, 542b) inclined downward toward a rear side for moving the receiving member (510) to a pulling-in completion position; and
wherein the refrigerator further includes a horizontal keeping structure (518d) which is lifted or lowered such that the receiving member (510) forms a horizontal state when the first roller (525) is lifted or lowered along the inclined surfaces (541b, 542b).

2. The refrigerator of claim 1, wherein the transmission gear (552) includes:
a first gear (552a); and
a second gear (552b) having a diameter larger than a diameter of the first gear (552a),
wherein the first rack (557) includes a first rack gear portion (557a) engaged with the first gear (552a) at a lower side of the first gear (557), and
wherein the second rack (554) includes a second rack gear portion (555) engaged with the second gear (552b) at an upper side of the second gear (552b) and formed to be longer than the length of the first rack gear portion (557a).

3. The refrigerator of claim 2, wherein the receiving member (510) is movable between the pulling-in completion position and a pulling-out completion position,
wherein during a pulling out movement of the receiving member (510), the cover member (580) reaches an opening completion position before the receiving member (510) reaches the pulling-out completion position, and
wherein a horizontal distance between an imaginary line A1 passing vertically through a rotation shaft of the transmission gear (552) at the opening completion position of the cover member (580) and a center of gravity (C1) of the cover member (580) is shorter than a radius of the second gear (552b).

4. The refrigerator of any one of claims 1 to 3, wherein the receiving member (510) is movable between the pulling-in completion position and a pulling-out completion position, and
wherein, at the pulling-in completion position of the receiving member (510), an imaginary line A1 passing vertically through a rotation shaft of the transmission gear (552) is located closer to a front end than a rear end of the pantry assembly (50).

5. The refrigerator of any one of claims 1 to 4, wherein the pantry assembly (50) further includes:
a connection frame (584) connected to both sides of the cover member (580), respectively,
wherein the second rack (554) includes a cover coupling rib (556) connected to the connection frame (584) and having a hook hole (556a), and
wherein the connection frame (584) includes:
a slot (587) for receiving the cover coupling rib (556), and
a frame hook (587a) for hooking to a hook hole (556a) of the cover coupling rib (556) received in the slot (587).

6. The refrigerator of claim 5, wherein the connection frame (584) further includes an opening (586d) aligned with the hook hole (556a) in a vertical direction.

7. The refrigerator of claims 5 or 6, wherein the cover member (580) includes a coupling hook (580d) extending downward, wherein the connection frame (584) further includes:
a coupling wall (586a) in which a coupling hole (586b) with which the coupling hook (580d) is coupled is formed.

8. The refrigerator of any one of claims 1 to 7,
wherein the first roller (525) is supported by the first guide portion (541) in a state where the first roller (525) is received in the space (540a) of the guide rail (540),
wherein the inclined surface (542b) of the second guide portion (542) is inclined at the same angle as the inclined surface (541b) of the first guide portion (541), and
wherein the first roller (525) is in contact with the inclined surface (541b) of the first guide portion (541) before the receiving member (510) is moved to the pulling-in completion position.

9. The refrigerator of claim 8, wherein the guide rail (540) further includes a connection portion (543) connecting the inclined surface (541b) of the first guide portion (541) and the inclined surface (542b) of the second guide portion (542) with each other.

10. The refrigerator of claims 8 or 9, wherein the receiving member (510) further includes:
guide protrusions (518) protruding outward from both side walls (103, 104) of the receiving member (510) and extending in the front and rear direction of the receiving member (510),
wherein the supporter (530) further includes a second roller (534) for supporting the guide protrusion (518), and
wherein the horizontal keeping structure includes an inclined rib (518d) guide protrusions (518) with which the second roller (534) is in contact and which is inclined at the same angle as the inclined surface of the first guide portion (541) when the first roller (525) is in contact with the inclined surface of the first guide portion (541).

11. The refrigerator of claim 10, wherein the guide protrusion (518) includes:
a lower rib (518a);
an upper rib (518b) positioned above the lower rib (518a) and spaced apart from the lower rib (518a); and
a plurality of connection ribs (518c) connecting the lower rib (518a) and the upper rib (518b) with each other,
wherein the lower rib (518a) includes the inclined rib (518d), and
wherein the front end portion of the inclined rib (518d) is connected to the front end portion of the upper rib (518b).

12. The refrigerator of any one of claims 1 to 11, wherein the pantry assembly (50) further includes:
a connection frame (584) connected to both sides of the cover member (580), and
wherein at least one of the cover member (580) and the connection frame (584) is provided with a spacer rib (589) so that a gap (G1) exists between the cover member (580) and the receiving member (510), and
wherein the spacer ribs (589) protrude downward from at least one of the cover member (580) and the connection frame (584) and are seated on the upper surface of each of the side walls on both sides of the receiving member (510).

13. The refrigerator of claim 12, wherein each of the side walls (513, 514) of the receiving member (510) includes:
a first wall (513a) having a horizontal upper surface,
an inclined wall (513b) having an upper surface which is inclined downward from the first wall (513a) toward the rear and in which the inclination angle of the upper surface is the same as the inclined surface of the first guide portion (541), and
a second wall (513c) extending rearward from the inclined wall (513b) and having a horizontal upper surface, and
wherein the spacer rib (589) is in contact with the inclined wall (513b) when the first roller (525) is in contact with the inclined surface of the first guide portion (541).

14. The refrigerator of any one of claims 8 to 13, wherein the receiving member (510) is movable between the pulling-in completion position and the pulling-out completion position, and
wherein, at a point of time when the first roller (525) is in contact with the inclined surface of the first guide portion (541) in a process in which the receiving member (510) moves from the pulling-out completion position to the pulling-in complete position, the center of gravity (C2) of the receiving member (510) and the center of gravity (C1) of the cover member (580) are located forward of the imaginary line (A1) and the center of gravity (C2) of the receiving member (510) is located forward of the center of gravity (C1) of the cover member (580).

## Patentansprüche

1. Kühlschrank, der Folgendes umfasst:
ein Gehäuse (10), das einen Innenkasten (101) aufweist, der eine Vorratskammer (11, 12) bildet; und
eine Speisekammeranordnung (50), die an beiden Seitenwänden (102, 103) des Innenkastens (101) installiert ist, wobei die Speisekammeranordnung (50) Folgendes umfasst:
ein Aufnahmeelement (510), das einen Aufnahmeraum (511) bildet, wobei das Aufnahmeelement (510) in die Vorratskammer (11, 12) hineingeschoben und aus dieser herausgezogen werden kann;
eine Traganordnung, die mit dem Aufnahmeelement (510) verbunden ist, wobei die Traganordnung konfiguriert ist, ein Hineinschieben und Herausziehen des Aufnahmeelements (510) zu führen; und
ein Abdeckelement (580), das mit der Traganordnung verbunden ist, wobei das Abdeckelement (580) den Aufnahmeraum (511) wenigstens teilweise bedeckt und wobei das Abdeckelement (580) so konfiguriert ist, sich in einer Richtung entgegengesetzt zum Aufnahmeelement (510) zu bewegen, wenn das Aufnahmeelement (510) hineingeschoben und herausgezogen wird;
wobei das Aufnahmeelement (510) mit einer ersten Rolle (525) gekoppelt ist, die am hinteren Endabschnitt des Aufnahmeelements (510) an beiden Seitenwänden (513, 514) des Aufnahmeelements (510) drehbar installiert ist;
wobei die Traganordnung einen Träger (530), der Führungsschienen (540) umfasst, und eine Übertragungseinheit, die am Träger (530) installiert ist und konfiguriert ist, eine Bewegungskraft des Aufnahmeelements (510) auf das Abdeckelement (580) zu übertragen, umfasst;
wobei die Übertragungseinheit ein elastisches Element (560) zum Bereitstellen einer elastischen Kraft für das Aufnahmeelement (510) umfasst, um das Hineinschieben des Aufnahmeelements (510) bei einem Vorgang des Hineinschiebens des Aufnahmeelements (510) zu unterstützen;
wobei das Aufnahmeelement (510) einen Übertragungsvorsprung (519) aufweist, der mit der Übertragungseinheit verbunden ist, wobei die Übertragungseinheit Folgendes umfasst:
ein Verbindungselement (562), das mit dem Übertragungsvorsprung (519) des Aufnahmeelements (510) gekoppelt ist,
eine erste Zahnstange (557), die mit dem Verbindungselement (562) verbunden ist,
ein Getriebe (552), das mit der ersten Zahnstange (557) in Eingriff ist, und
eine zweite Zahnstange (554), die mit dem Getriebe (552) in Eingriff ist und mit dem Abdeckelement (580) verbunden ist; und
wobei die Führungsschienen (540) einen ersten Führungsabschnitt (541) und einen zweiten Führungsabschnitt (542), der über dem ersten Führungsabschnitt (541) positioniert ist und zusammen mit dem ersten Führungsabschnitt (542) eine Aussparung (540a) bildet, umfassen;
**dadurch gekennzeichnet, dass** die Aussparung (540a) der Führungsschienen (540) konfiguriert ist, die erste Rolle (525) aufzunehmen, und dass jeder der Führungsabschnitte (541, 542) eine schräge Oberfläche (541b, 542b) aufweist, die zur Rückseite schräg nach unten verläuft, um das Aufnahmeelement (510) zu einer vollständig hineingeschobenen Position zu bewegen; und
wobei der Kühlschrank ferner eine horizontale Haltestruktur (518d) aufweist, die angehoben oder abgesenkt wird, so dass das Aufnahmeelement (510) einen horizontalen Zustand einnimmt, wenn die erste Rolle (525) längs der schrägen Oberflächen (541b, 542b) angehoben oder abgesenkt wird.

2. Kühlschrank nach Anspruch 1, wobei das Getriebe (552) Folgendes umfasst:
ein erstes Zahnrad (552a); und
ein zweites Zahnrad (552b), das einen Durchmesser hat, der größer als ein Durchmesser des ersten Zahnrads (552a) ist,
wobei die erste Zahnstange (557) einen ersten Zahnstangenabschnitt (557a) aufweist, der mit dem ersten Zahnrad (552a) an einer Unterseite des ersten Zahnrads (557) in Eingriff ist, und
wobei die zweite Zahnstange (554) einen zweiten Zahnstangenabschnitt (555) aufweist, der mit dem zweiten Zahnrad (552b) an einer Oberseite des zweiten Zahnrads (552b) in Eingriff ist und so ausgebildet ist, dass er länger als die Länge des ersten Zahnstangenabschnitts (557a) ist.

3. Kühlschrank nach Anspruch 2, wobei das Aufnahmeelement (510) zwischen der vollständig hineingeschobenen Position und einer vollständig herausgezogenen Position bewegt werden kann,
wobei während einer Bewegung zum Herausziehen des Aufnahmeelements (510) das Abdeckelement (580) eine vollständig geöffnete Position erreicht, bevor das Aufnahmeelement (510) die vollständig herausgezogene Position erreicht, und
wobei ein horizontaler Abstand zwischen einer imaginären Linie (A1), die vertikal durch eine drehbare Welle des Getriebes (552) bei der vollständig geöffneten Position des Abdeckelements (580) verläuft, und einem Masseschwerpunkt (C1) des Abdeckelements (580) kleiner als ein Radius des zweiten Zahnrads (552b) ist.

4. Kühlschrank nach einem der Ansprüche 1 bis 3, wobei das Aufnahmeelement (510) zwischen der vollständig hineingeschobenen Position und einer vollständig herausgezogenen Position bewegt werden kann, und
wobei sich bei der vollständig hineingeschobenen Position des Aufnahmeelements (510) eine imaginäre Linie A1, die vertikal durch eine drehbare Welle des Getriebes (552) verläuft, näher an einem vorderen Ende als an einem hinteren Ende der Speisekammeranordnung (50) befindet.

5. Kühlschrank nach einem der Ansprüche 1 bis 4, wobei die Speisekammeranordnung (50) ferner Folgendes umfasst:
einen Verbindungsrahmen (584), der jeweils mit beiden Seiten des Abdeckelements (580) verbunden ist,
wobei die zweite Zahnstange (554) eine Abdeckungskopplungsrippe (556) aufweist, die mit dem Verbindungsrahmen (584) verbunden ist und ein Hakenloch (556a) hat, und
wobei der Verbindungsrahmen (584) Folgendes umfasst:
einen Schlitz (587) zum Aufnehmen der Abdeckungskopplungsrippe (556), und
einen Rahmenhaken (587a) zum Einhaken in ein Hakenloch (556a) der Abdeckungskopplungsrippe (556), die im Schlitz (587) aufgenommen ist.

6. Kühlschrank nach Anspruch 5, wobei der Verbindungsrahmen (584) ferner eine Öffnung (586d) aufweist, die in einer vertikalen Richtung auf das Hakenloch (556a) ausgerichtet ist.

7. Kühlschrank nach Anspruch 5 oder 6, wobei das Abdeckelement (580) einen Kopplungshaken (580d) aufweist, der nach unten verläuft, wobei der Verbindungsrahmen (584) ferner Folgendes umfasst:
eine Kopplungswand (586a), in der ein Kopplungsloch (586b) ausgebildet ist, mit dem der Kopplungshaken (580d) gekoppelt ist.

8. Kühlschrank nach einem der Ansprüche 1 bis 7,
wobei die erste Rolle (525) in einem Zustand, in dem die erste Rolle (525) in der Aussparung (540a) der Führungsschiene (540) aufgenommen ist, durch den ersten Führungsabschnitt (541) getragen wird,
wobei die schräge Oberfläche (542b) des zweiten Führungsabschnitts (542) im gleichen Winkel wie die schräge Oberfläche (541b) des ersten Führungsabschnitts (541) geneigt ist, und
wobei die erste Rolle (525) mit der schrägen Oberfläche (541b) des ersten Führungsabschnitts (541) in Kontakt ist, bevor das Aufnahmeelement (510) zur vollständig hineingeschobenen Position bewegt wird.

9. Kühlschrank nach Anspruch 8, wobei die Führungsschiene (540) ferner einen Verbindungsabschnitt (543) umfasst, der die schräge Oberfläche (541b) des ersten Führungsabschnitts (541) und die schräge Oberfläche (542b) des zweiten Führungsabschnitts (542) miteinander verbindet.

10. Kühlschrank nach Anspruch 8 oder 9, wobei das Aufnahmeelement (510) ferner Folgendes umfasst:
Führungsvorsprünge (518), die von beiden Seitenwänden (103, 104) des Aufnahmeelements (510) nach außen vorstehen und in einer Richtung des Aufnahmeelements (510) von vorn nach hinten verlaufen,
wobei der Träger (530) ferner eine zweite Rolle (534) zum Tragen des Führungsvorsprungs (518) aufweist, und
wobei die horizontale Haltestruktur eine schräge Rippe (518d) der Führungsvorsprünge (518) aufweist, mit der die zweite Rolle (534) in Kontakt ist, und die im gleichen Winkel wie die schräge Oberfläche des ersten Führungsabschnitts (541) geneigt ist, wenn die erste Rolle (525) mit der schrägen Oberfläche des ersten Führungsabschnitts (541) in Kontakt ist.

11. Kühlschrank nach Anspruch 10, wobei der Führungsvorsprung (518) Folgendes umfasst:
eine untere Rippe (518a);
eine obere Rippe (518b), die über der unteren Rippe (518a) positioniert und von der unteren Rippe (518a) beabstandet ist; und
mehrere Verbindungsrippen (518c), die die untere Rippe (518a) und die obere Rippe (518b) miteinander verbinden,
wobei die untere Rippe (518a) die schräge Rippe (518d) umfasst, und
wobei der vordere Endabschnitt der schrägen Rippe (518d) mit dem vorderen Endabschnitt der oberen Rippe (518b) verbunden ist.

12. Kühlschrank nach einem der Ansprüche 1 bis 11, wobei die Speisekammeranordnung (50) ferner Folgendes umfasst:
einen Verbindungsrahmen (584), der mit beiden Seiten des Abdeckelements (580) verbunden ist, und
wobei das Abdeckelement (580) und/oder der Verbindungsrahmen (584) mit einer Abstandsrippe (589) versehen sind, so dass zwischen dem Abdeckelement (580) und dem Aufnahmeelement (510) ein Spalt (G1) existiert, und
wobei die Abstandsrippen (589) vom Abdeckelement (580) und/oder vom Verbindungsrahmen (584) nach unten vorstehen und auf der Oberseite jeder der Seitenwände auf beiden Seiten des Aufnahmeelements (510) aufliegen.

13. Kühlschrank nach Anspruch 12, wobei jede der Seitenwände (513, 514) des Aufnahmeelements (510) Folgendes umfasst:
eine erste Wand (513a), die eine horizontale Oberseite hat,
eine schräge Wand (513b), die eine Oberseite hat, die von der ersten Wand (513a) zur Rückseite schräg nach unten verläuft, und wobei der Neigungswinkel der Oberseite der gleiche wie der der schrägen Oberfläche des ersten Führungsabschnitts (541) ist, und
eine zweite Wand (513c), die von der schrägen Wand (513b) nach hinten verläuft und eine horizontale Oberseite hat, und
wobei die Abstandsrippe (589) mit der schrägen Wand (513b) in Kontakt ist, wenn die erste Rolle (525) mit der schrägen Oberfläche des ersten Führungsabschnitts (541) in Kontakt ist.

14. Kühlschrank nach einem der Ansprüche 8 bis 13, wobei das Aufnahmeelement (510) zwischen der vollständig hineingeschobenen Position und der vollständig herausgezogenen Position bewegt werden kann, und
wobei zu einem Zeitpunkt, zu dem die erste Rolle (525) mit der schrägen Oberfläche des ersten Führungsabschnitts (541) bei einem Vorgang, bei dem sich das Aufnahmeelement (510) von der vollständig herausgezogenen Position zu der vollständig hineingeschobenen Position bewegt, in Kontakt ist, der Masseschwerpunkt (C2) des Aufnahmeelements (510) und der Masseschwerpunkt (C1) des Abdeckelements (580) vor der imaginären Linie (A1) liegen und der Masseschwerpunkt (C2) des Aufnahmeelements (510) vor dem Masseschwerpunkt (C1) des Abdeckelements (580) liegt.

## Revendications

1. Réfrigérateur comportant :
une armoire (10) incluant un caisson intérieur (101) formant une chambre de stockage (11, 12) ; et
un ensemble de garde-manger (50) installé sur deux parois latérales (102, 103) du caisson intérieur (101), dans lequel l'ensemble de garde-manger (50) inclut :
un élément de réception (510) formant un espace de réception (511), l'élément de réception (510) pouvant être entré dans la chambre de stockage (11, 12) et sorti hors de celle-ci ;
un ensemble de support relié à l'élément de réception (510), l'ensemble de support étant configuré pour guider une entrée et une sortie de l'élément de réception (510) ; et
un élément de couvercle (580) relié à l'ensemble de support, l'élément de couvercle (580) recouvrant au moins partiellement l'espace de réception (511) et l'élément de couvercle (580) étant configuré pour se déplacer dans une direction opposée à l'élément de réception (510) lorsque l'élément de réception (510) est entré et sorti ;
dans lequel l'élément de réception (510) est couplé à un premier galet (525) installé de façon à pouvoir tourner sur la partie d'extrémité arrière de l'élément de réception (510) sur deux parois latérales (513, 514) de l'élément de réception (510) ;
dans lequel l'ensemble de support inclut un support (530) incluant des rails de guidage (540) et une unité de transmission installée sur le support (530) et configurée pour transmettre une force motrice de l'élément de réception (510) à l'élément de couvercle (580) ;
dans lequel l'unité de transmission inclut un élément élastique (560) pour donner une force élastique à l'élément de réception (510) pour supporter l'entrée de l'élément de réception (510) pendant un processus d'entrée de l'élément de réception (510) ;
dans lequel l'élément de réception (510) inclut une saillie de transmission (519) pour être relié à l'unité de transmission, dans lequel l'unité de transmission inclut :
un élément de liaison (562) couplé à la saillie de transmission (519) de l'élément de réception (510),
une première crémaillère (557) reliée à l'élément de liaison (562),
un engrenage de transmission (552) en prise avec la première crémaillère (557), et
une seconde crémaillère (554) en prise avec l'engrenage de transmission (552) et reliée à l'élément de couvercle (580) ; et
dans lequel les rails de guidage (540) incluent une première partie de guidage (541) et une seconde partie de guidage (542) positionnée au-dessus de la première partie de guidage (541) et formant un espace (540a) en association avec la première partie de guidage (542) ;
**caractérisé en ce que** l'espace (540a) des rails de guidage (540) est configuré pour recevoir le premier galet (525), et chacune des parties de guidage (541, 542) inclut une surface inclinée (541b, 542b) inclinée vers le bas vers un côté arrière pour amener l'élément de réception (510) à une position de fin d'entrée ; et
dans lequel le réfrigérateur inclut en outre une structure de maintien à l'horizontale (518d) qui est levée ou abaissée de telle sorte que l'élément de réception (510) forme un état horizontal lorsque le premier galet (525) est levé ou abaissé le long des surfaces inclinées (541b, 542b).

2. Réfrigérateur selon la revendication 1, dans lequel l'engrenage de transmission (552) inclut :
un premier engrenage (552a) ; et
un second engrenage (552b) ayant un diamètre supérieur à un diamètre du premier engrenage (552a),
dans lequel la première crémaillère (557) inclut une première partie d'engrenage de crémaillère (557a) en prise avec le premier engrenage (552a) sur un côté inférieur du premier engrenage (557), et
dans lequel la seconde crémaillère (554) inclut une seconde partie d'engrenage de crémaillère (555) en prise avec le second engrenage (552b) sur un côté supérieur du second engrenage (552b) et formée pour être plus longue que la longueur de la première partie d'engrenage de crémaillère (557a).

3. Réfrigérateur selon la revendication 2, dans lequel l'élément de réception (510) est mobile entre la position de fin d'entrée et une position de fin de sortie,
dans lequel pendant un mouvement de sortie de l'élément de réception (510), l'élément de couvercle (580) atteint une position de fin d'ouverture avant que l'élément de réception (510) atteigne la position de fin de sortie, et
dans lequel une distance horizontale entre une ligne fictive A1 passant verticalement par un axe de rotation de l'engrenage de transmission (552) à la position de fin d'ouverture de l'élément de (580) et un centre de gravité (C1) de l'élément de couvercle (580) est plus courte qu'un rayon du second engrenage (552b).

4. Réfrigérateur selon l'une quelconque des revendications 1 à 3, dans lequel l'élément de réception (510) est mobile entre la position de fin d'entré et une position de fin de sortie, et
dans lequel, à la position de fin d'entrée de l'élément de réception (510), une ligne fictive A1 passant verticalement par un axe de rotation de l'engrenage de transmission (552) est située plus près d'une extrémité avant que d'une extrémité arrière de l'ensemble de garde-manger (50).

5. Réfrigérateur selon l'une quelconque des revendications 1 à 4, dans lequel l'ensemble de garde-manger (50) inclut en outre :
un châssis de liaison (584) relié aux deux côtés de l'élément de couvercle (580), respectivement,
dans lequel la seconde crémaillère (554) inclut une nervure de couplage de couvercle (556) reliée au châssis de liaison (584) et ayant un trou de crochet (556a), et
dans lequel le châssis de liaison (584) inclut :
une fente (587) pour recevoir la nervure de couplage de couvercle (556), et
un crochet de châssis (587a) pour s'accrocher à un trou de crochet (556a) de la nervure de couplage de couvercle (556) reçue dans la fente (587).

6. Réfrigérateur selon la revendication 5, dans lequel le châssis de liaison (584) inclut en outre une ouverture (586d) alignée avec le trou de crochet (556a) dans une direction verticale.

7. Réfrigérateur selon les revendications 5 ou 6, dans lequel l'élément de couvercle (580) inclut un crochet de couplage (580d) s'étendant vers le bas, dans lequel le châssis de liaison (584) inclut en outre :
une paroi de couplage (586a) dans laquelle est formé un trou de couplage (586b) auquel le crochet de couplage (580d) est couplé.

8. Réfrigérateur selon l'une quelconque des revendications 1 à 7,
dans lequel le premier galet (525) est supporté par la première partie de guidage (541) dans un état où le premier galet (525) est reçu dans l'espace (540a) du rail de guidage (540),
dans lequel la surface inclinée (542b) de la seconde partie de guidage (542) est inclinée au même angle que la surface inclinée (541b) de la première partie de guidage (541), et
dans lequel le premier galet (525) est en contact avec la surface inclinée (541b) de la première partie de guidage (541) avant que l'élément de réception (510) soit amené à la position de fin d'entrée.

9. Réfrigérateur selon la revendication 8, dans lequel le rail de guidage (540) inclut en outre une partie de liaison (543) reliant la surface inclinée (541b) de la première partie de guidage (541) et la surface inclinée (542b) de la seconde partie de guidage (542) l'une avec l'autre.

10. Réfrigérateur selon les revendications 8 ou 9, dans lequel l'élément de réception (510) inclut en outre :
des saillies de guidage (518) faisant saillie vers l'extérieur à partir des deux parois latérales (103, 104) de l'élément de réception (510) et s'étendant dans les directions avant et arrière de l'élément de réception (510),
dans lequel le support (530) inclut en outre un second galet (534) pour supporter la saillie de guidage (518), et
dans lequel la structure de maintien à l'horizontale inclut une nervure inclinée (518d) des saillies de guidage (518) avec laquelle le second galet (534) est en contact et qui est inclinée au même angle que la surface inclinée de la première partie de guidage (541) lorsque le premier galet (525) est en contact avec la surface inclinée de la première partie de guidage (541).

11. Réfrigérateur selon la revendication 10, dans lequel la saillie de guidage (518) inclut :
une nervure inférieure (518a) ;
une nervure supérieure (518b) positionnée au-dessus de la nervure inférieure (518a) et espacée de la nervure inférieure (518a) ; et
une pluralité de nervures de liaison (518c) reliant la nervure inférieure (518a) et la nervure supérieure (518b) l'une avec l'autre,
dans lequel la nervure inférieure (518a) inclut la nervure inclinée (518d), et
dans lequel la partie d'extrémité avant de la nervure inclinée (518d) est reliée à la partie d'extrémité avant de la nervure supérieure (518b).

12. Réfrigérateur selon l'une quelconque des revendications 1 à 11, dans lequel l'ensemble de garde-manger (50) inclut en outre :
un châssis de liaison (584) relié aux deux côtés de l'élément de couvercle (580), et
dans lequel au moins un élément parmi l'élément de couvercle (580) et le châssis de liaison (584) est pourvu d'une nervure d'espacement (589) de sorte qu'il existe un interstice (G1) entre l'élément de couvercle (580) et l'élément de réception (510), et
dans lequel les nervures d'espacement (589) font saillie vers le bas à partir d'au moins un élément parmi l'élément de couvercle (580) et le châssis de liaison (584) et sont en appui sur la surface supérieure de chacune des parois latérales des deux côtés de l'élément de réception (510).

13. Réfrigérateur selon la revendication 12, dans lequel chacune des parois latérales (513, 514) de l'élément de réception (510) inclut :
une première paroi (513a) ayant une surface supérieure horizontale,
une paroi inclinée (513b) ayant une surface supérieure qui est inclinée vers le bas à partir de la première paroi (513a) vers l'arrière et dans laquelle l'angle d'inclinaison de la surface supérieure est le même que la surface inclinée de la première partie de guidage (541), et
une seconde paroi (513c) s'étendant vers l'arrière à partir de la paroi inclinée (513b) et ayant une surface supérieure horizontale, et
dans lequel la nervure d'espacement (589) est en contact avec la paroi inclinée (513b) lorsque le premier galet (525) est en contact avec la surface inclinée de la première partie de guidage (541).

14. Réfrigérateur selon l'une quelconque des revendications 8 à 13, dans lequel l'élément de réception (510) est mobile entre la position de fin d'entrée et la position de fin de sortie, et
dans lequel, à un instant où le premier galet (525) est en contact avec la surface inclinée de la première partie de guidage (541) pendant un processus au cours duquel l'élément de réception (510) se déplace de la position de fin de sortie à la position de fin d'entrée, le centre de gravité (C2) de l'élément de réception (510) et le centre de gravité (C1) de l'élément de couvercle (580) sont situés vers l'avant de la ligne fictive (A1) et le centre de gravité (C2) de l'élément de réception (510) est situé vers l'avant du centre de gravité (C1) de l'élément de couvercle (580).
